(19) Europäisches Patentamt
European Patent Office
Office européen des brevets

(11) **EP 1 701 871 B1**

(12) **EUROPEAN PATENT SPECIFICATION**

(45) Date of publication and mention
of the grant of the patent:
**09.04.2008 Bulletin 2008/15**

(21) Application number: **04700998.0**

(22) Date of filing: **09.01.2004**

(51) Int Cl.:
***B60T 8/17*** *(2006.01)*

(86) International application number:
**PCT/EP2004/000113**

(87) International publication number:
**WO 2005/068271 (28.07.2005 Gazette 2005/30)**

(54) **ESTIMATION OF THE ROAD CONDITION UNDER A VEHICLE**

FAHRBAHNZUSTANDSERFASSUNGSVORRICHTUNG UND -VERFAHREN IN EINEM KRAFTFAHRZEUG

ESTIMATION DE L'ETAT DE LA ROUTE SOUS UN VEHICULE

(84) Designated Contracting States:
**DE ES FR GB IT SE**

(43) Date of publication of application:
**20.09.2006 Bulletin 2006/38**

(73) Proprietor: **Nira Dynamics AB**
**583 30 Linköping (SE)**

(72) Inventors:
• **LINDSKOG, Peter**
**S-583 31 Linköping (SE)**

• **SJÖSTRAND, Niclas**
**S-72240 Västeras (SE)**
• **DREVÖ, Markus**
**S-582 36 Linköping (SE)**

(74) Representative: **Samson & Partner**
**Patentanwälte**
**Widenmayerstraße 5**
**80538 München (DE)**

(56) References cited:
**US-A- 5 541 859**     **US-A- 5 719 565**
**US-A1- 2002 059 824**

**Description**

**FIELD OF THE INVENTION**

The present invention relates generally to the estimation of the road condition under a vehicle and, for example, to systems, methods, and computer program products for estimating the road condition under a vehicle.

**BACKGROUND OF THE INVENTION**

Modern cars comprise electronic control systems as anti-lock-braking systems (ABS), dynamic stability systems, anti-spin systems and traction control systems. Besides these active control systems there also exist driver safety information systems as road friction indicators and sensor-free tyre pressure monitoring systems which present information about the driving condition to the driver.

All the above-mentioned systems benefit from the knowledge about the road surface condition under the vehicle. Several different techniques are used in the prior art to determine the road surface condition under a driving vehicle. One such technique is based on vertical accelerometers in a suspension system of a car. Another technique is based on level meters in the fuel tank of the car. Other techniques use special air mass flow sensors in the engine control unit.

The present invention relates to techniques for estimating the road condition which make use of the signals obtained from wheel speed sensors., e.g. the wheel speed sensors of standard anti-block braking systems. Using the signals from wheel speed sensors of ABS systems (and/or from the vehicle's internal CAN-bus) provides an economical way to road surface condition measurements since these ABS systems belong to the standard equipment of the majority of the cars and trucks sold today.

Such a system which is based on the signals of wheel speed sensors is for example disclosed in US-patent 5,566,090 which is directed to a method for detecting stretches of bad road directly from the raw data provided by an ABS sensor. The method uses the fact that stretches of bad road result in strong fluctuations of the wheel speeds of the car. Strong wheel speed fluctuations in turn result in large differences between successive segment times, where the segment time is the time the wheel needs to pass through associated angle segments. The disclosed method determines a stretch of bad road if the difference between successive segment times is greater than a pre-set limit value. This simple decision algorithm operates directly on the raw signals of the wheel speed sensor. The US 4,837,727 discloses a method which is based on a similar decision algorithm.

EP 0 795 448 A2 discloses a road surface condition detection system which comprises a wheel speed sensor for detecting a wheel speed of at least one wheel to generate a wheel speed signal and a control unit which integrates the wheel speed signal for a predetermined period of time. The control unit determines a rough road surface condition when the integrated signal is above a predetermined threshold value and, otherwise, a normal road surface condition. Before the integration, the wheel speed signal is band-pass filtered in the frequency range of 10-15 Hz.

US5719565 discloses a system and a method for estimating a road surface condition further comprising a wheel speed signal correction.

**SUMMARY OF THE INVENTION**

A first aspect of the invention is directed to a system for estimating the ground condition under a driving vehicle. The system comprises a wheel speed sensor for sensing a wheel speed signal which is indicative of the wheel speed of a vehicle's wheel driving over the ground and a first analyser unit coupled to said wheel speed sensor. The first analyser unit comprises a sensor imperfection estimation section which is designed to estimate a sensor imperfection signal from the wheel speed signal which is indicative of the sensor imperfection of the wheel speed sensor, a signal correction section which is designed to determine an imperfection-corrected sensor signal from the wheel speed signal and the sensor imperfection signal, and a ground condition estimation section which is designed to estimate a first estimation value indicative of the ground condition from the imperfection-corrected sensor signal.

Another aspect of the invention is directed to a method for estimating the ground condition under a driving vehicle, comprising the steps of:

- sensing a wheel speed signal by means of a wheel speed sensor which is indicative of the wheel speed of a vehicle's wheel driving over the ground; and
- estimating a sensor imperfection signal from the wheel speed signal which is indicative of the sensor imperfection of the wheel speed sensor;
- determining an imperfection-corrected sensor signal from the wheel speed signal and the sensor imperfection signal; and

- estimating a first estimation value indicative of the ground condition from the imperfection-corrected sensor signal.

A further aspect of the invention is directed to a computer program including program code for carrying out a method, when executed on a processing system, of estimating the ground condition under a driving vehicle, the method comprising the steps of:

- sensing a wheel speed signal by means of a wheel speed sensor which is indicative of the wheel speed of a vehicle's wheel driving over the ground; and
- estimating a sensor imperfection signal from the wheel speed signal which is indicative of the sensor imperfection of the wheel speed sensor;
- determining an imperfection-corrected sensor signal from the wheel speed signal and the sensor imperfection signal; and
- estimating a first estimation value indicative of the ground condition from the imperfection-corrected sensor signal.

Other features are inherent in the methods and systems disclosed or will become apparent to those skilled in the art from the following detailed description of embodiments and its accompanying drawings.

## DESCRIPTION OF THE DRAWINGS

Embodiments of the invention will now be described, by way of example, and with reference to the accompanying drawings, in which:

Fig. 1 shows a car having four wheels and driving on a road which changes in driving direction from a normal surface condition to a rough road condition;

Fig. 2 schematically shows a wheel speed sensor comprised of a segmented rotary element and a sensor element;

Fig. 3 shows an exemplary diagram of four wheel speed signals obtained from the four wheels of a driving vehicle as a function of time;

Fig. 4 shows a diagram representing a wheel speed signal as a function of the sample number;

Fig. 5 shows a block diagram of an embodiment of the system for estimating the road condition under the vehicle, the embodiment comprising a wheel speed sensor and an analyser unit;

Fig. 6 shows a block diagram of an embodiment of the ground condition estimation section which is part of the system of Fig. 5;

Fig. 7 shows a block diagram of a further embodiment of the ground condition estimation section which is part of the system of Fig. 5;

Fig. 8 shows a block diagram of an embodiment of the variance estimation section which is part of the ground condition estimation sections of Fig. 6 and Fig. 7;

Fig. 9 shows a block diagram of an embodiment of the system for estimating the road condition under a vehicle which is based on the signals of four different wheel speed sensors;

Fig. 10 shows a block diagram of an embodiment of a decision unit of the system for estimating the road condition;

Fig. 11 shows a block diagram of an embodiment of the system with two different types of analyser units;

Fig. 12 shows a block diagram of an embodiment of the second type of analyser unit comprising a filter section;

Fig. 13 shows a block diagram of an embodiment of the system for determining the road condition, wherein the system comprises two types of analyser units which evaluate the signals from four different wheel speed sensors;

Fig. 14 shows a block diagram of an alternative embodiment to the one of Fig. 13;

Fig. 15    shows several diagrams representing the operation of the embodiment of Fig. 13.

## DESCRIPTION OF THE PREFERRED EMBODIMENTS

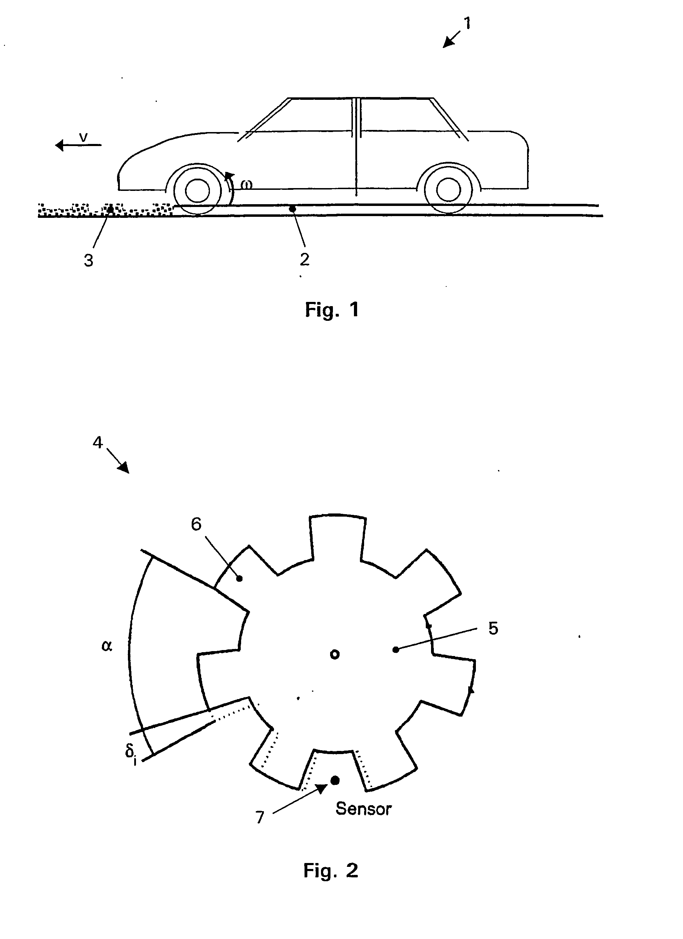

Fig. 1 shows a car 1 having four wheels and driving on a road which changes its surface condition from a normal surface condition 2 to a rough surface condition 3. A normal surface condition may for example be present when the car 1 is driving on an asphaltic road. A rough road condition may for example occur on gravel, rough asphalt, rough ice and some types of snowy roads. The arrow labelled with v in Fig. 1 indicates the driving direction of the car 1. The arrow labelled with ω indicates the wheel rotation which is caused by the forward movement of the car 1. In the description of the embodiments which follows now, the principles of the invention are explained with reference to a car having four wheels. However, the proposed systems and methods may as well be applied to other types of vehicles, as for example trucks, buses and motor cycles, having a different number of wheels.

### Wheel speed sensor imperfections

Fig. 2 shows a schematic diagram of a wheel speed sensor 4 comprising a toothed wheel 5 with seven identical teeth 6. A sensor 7 is located at the circumference of the toothed wheel 5. The sensor 7 is arranged to generate a sensor signal whenever a tooth 6 of the toothed wheel 5 passes the sensor 7. The sensor 7 may be an optical sensor, a magnetic sensor or any other appropriate type of sensor which is able to detect the presence and the non-presence of a tooth 6.

The sensor 7 may either generate a sensor signal whenever the sensor 7 detects a change of its environment, i.e. whenever a tooth 6 of the toothed wheel 5 enters or leaves the sensor region, or only when a tooth 6 enters (or alternatively leaves) the sensor region. In the example of Fig. 2, there are in total seven sensor signals generated during one complete revolution of the toothed wheel 5. It is appreciated that, instead of the toothed wheel 5, the wheel speed sensor 4 may comprise any type of segmented rotary element 5 which generates a sensor signal for each passing sensor segment 6. Another example for such an segmented rotary element 5 is a slotted disk. The total number of segments is in the following denoted as *L. L* is not limited to the value chosen in the embodiment of Fig. 2 (L=7) but may be an arbitrary positive integer number.

In more detail, the sensor 7 of the wheel speed sensor 4 internally generates an internal signal with two possible states, high and low (e.g., high indicating a covered sensor 7 and low indicating an uncovered sensor 7), which in turn triggers the output of a clock signal delivered from a timer unit (not shown), and outputs a data stream. The data stream comprises data samples in form of, for instance, a real or integer number *t(n)* which is representative of the time instance of the occurrence of a corresponding internal signal. The time span $\Delta t(n)=t(n)-t(n-1)$ is defined as the duration of time between two successive internal signals. Thereby, *n* is an integer number which denotes the sample number, i.e. *n* = 1 corresponds to the first sensor signal, *n* = 2 to the second sensor signal, etc.

In Fig. 2, the solid line represents an ideal rotary element 5 which comprises seven identical segments 6, wherein each of the segments 6 covers the angle α depicted in Fig. 2. The dotted line in Fig. 2 represents an unideal rotary element 5 in which the individual segments 6 do not have the same length but differ in length by an error angle δ. These deviations from a nominal angle α could for example arise due to fabrication errors or wear during usage. In the following, the deviations δ from the nominal value are called imperfection errors and it is assumed that each of the segments 6 of the rotary element has its own characterising imperfection error $\delta_l$ (*l*=1,...,*L*). For instance, embodiments for estimating the imperfection errors are disclosed in PCT/EP02/12409 of the same applicant. In the following, a further embodiment for estimating the imperfection errors is described in more detail which is based on the embodiments disclosed in PCT/EP02/12409.

Thus, the occurrence of a sensor signal indicates that the rotary element 5 has rotated around an angle of $\alpha=2\pi/L$, in the ideal case of no imperfection errors, and around an angle of $\alpha+\delta_1$, in the realistic case with imperfection errors. From these sensor signals representing time instances *t(n)* a corresponding wheel speed value ω(n) can be derived via the relation

$$\omega(n) = \frac{\alpha + \delta_l}{t(n) - t(n-1)} \qquad\qquad \text{(Eq. 1)}$$

wherein a high value of ω(*n*) indicates a fast rotating wheel and a low value of ω(n) is indicative of a slowly rotating wheel. Besides, an estimation value for the vehicle velocity can be obtained by relating the wheel speed ω(n) to the corresponding tire radius.

In the following embodiments, the values *t(n)*, $\Delta t(n)$ and ω(n), for simplification, are all denoted as wheel speed signals and are considered as originating from the wheel speed sensor 4.

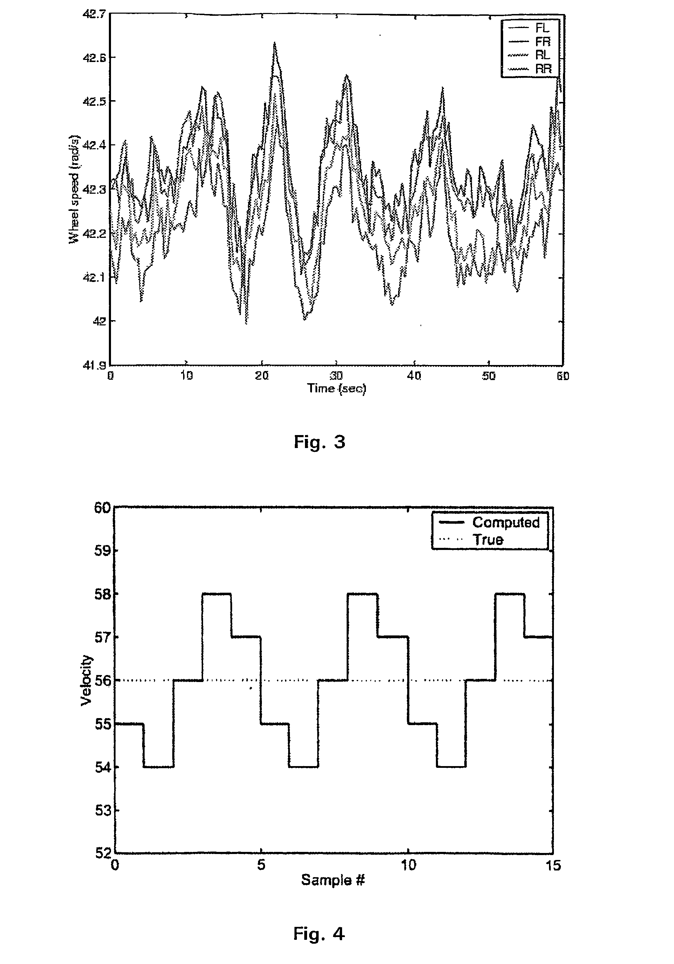

For exemplification, Fig. 3 shows a diagram of wheel speeds as a function of the time, wherein the plotted wheel speeds were obtained during a test drive of a four-wheeled car. The diagram comprises four lines, each line representing one of the four wheels of the car. The diagram shows that during the 60 seconds sample period, the vehicle was driving with nearly constant velocity corresponding to a mean wheel speed of approximately 42.3 rad/s. The diagram shows that although driving with nearly constant velocity the wheel speed signals are fluctuating due to, for example, the road roughness and the sensor imperfections.

Fig. 4 shows, in an idealised way neglecting the influence of the road condition, the impact of the segment imperfections of a wheel speed sensor 4 on the obtained wheel speed signal $\omega(n)$. The diagram of Fig. 4 shows the wheel speed values $\omega(n)$ as a function of the sample number $n$. There are 15 samples $n = 1,...15$ shown in the diagram which correspond to three complete revolutions of a rotary element 5 comprising L=5 segments 6 in total. Fig. 4 represents the case of a car 1 driving with exactly constant velocity v, wherein the dotted curve corresponds to the wheel speed signal $\omega(n)$ obtained from a wheel speed sensor 4 having an ideally segmented rotary element 5 and the solid curve corresponds to the case of an unideal segmented rotary element 5 which generates a periodical fluctuation of the wheel speed around the average value of 56 rad/s. The value of 55 rad/s of the first sample corresponds to a segment which is slightly larger than a nominal segment thus producing a wheel speed value which is smaller than the expected value of 56 rad/s. The third sample corresponds to a segment which exactly corresponds to a nominal segment thus producing the expected value of 56 rad/s. The fourth sample corresponds to a segment which is smaller than a nominal segment thus producing a wheel speed which is larger than the nominal value of 56 rad/s. The 5th sample corresponds to the last segment of the rotary element and the 6th sample corresponds again to its first segment. In result, the solid curve of Fig. 4 shows a periodicity of five sample points which corresponds to a complete revolution of the rotary element 5 of the wheel speed sensor 4.

Below, further components of the system for estimating the road condition under a vehicle are explained in detail. It should however be noted that the subdivision of the components in sections and subsections has to be regarded as exemplary and not limiting. The subdivision is mainly used in order to increase the comprehensibility of the following embodiments. For the skilled person, this subdivision may also serve as a guideline for implementing the system. But, of course, other ways of structuring the system's functionality are also contemplable. Therefore, the subdivision according to the presented embodiments should be regarded as rather artificial and not as defining physical entities which can easily be distinguished within the final product.

**Analyser unit**

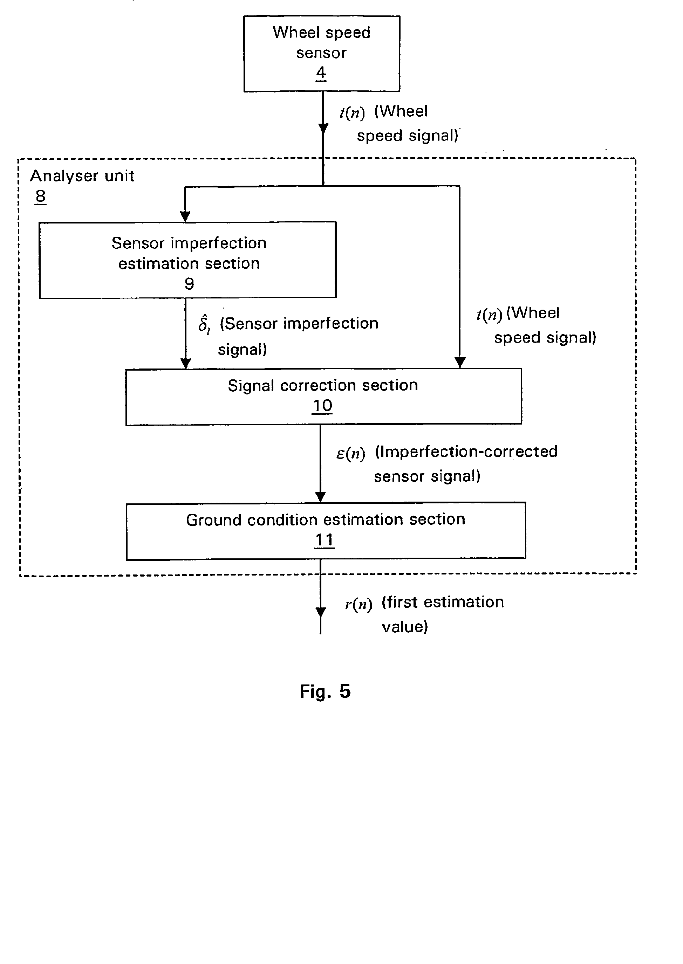

Fig. 5 schematically shows the components of an embodiment of the system for estimating the road condition. The wheel speed signal $t(n)$ obtained from the wheel speed sensor 4 is input to an analyser unit 8 which derives a first estimation value $r(n)$ from the received wheel speed signal $t(n)$.

In general, the analyser unit 8 provides an output signal (e.g. the first estimation value $r(n)$) which is indicative of the road condition under a wheel of the vehicle 1 on the basis of the received wheel speed signals (e.g. $t(n)$ or $\omega(n)$) of the associated wheel speed sensor 4. The output signal may for example be a binary signal which indicates a rough road condition with a logical one (true) and a normal road condition with a logical zero (false). The output signal could also be a real value, e.g. in the range from zero to one, whereby the value one indicates a maximal rough road condition, zero indicates an ideally smooth road condition and the intermediate values to indicate road conditions which lie in-between these two extremes.

A first embodiment of the analyser unit 8 shown in Fig. 5 comprises a sensor imperfection estimation section 9 for estimating the sensor imperfections $\delta_l$ of the rotary element 5 of the corresponding wheel speed sensor 4. It outputs a sensor imperfection signal $\hat{\delta}_1$, which comprises sensor imperfection values $\hat{\delta}_1$, one for each segment 6 of the rotary element 5. In a signal correction section 10, this sensor imperfection signal $\hat{\delta}_l$ is used to derive an imperfection-corrected sensor signal $\varepsilon(n)$ from the wheel speed signal t(n). A ground condition estimation section 11 then determines the first estimation value $r(n)$ of the analyser unit 8 on the basis of the imperfection-corrected sensor signal $\varepsilon(n)$. The functionality of the imperfection estimation section 9, the signal correction section 10 and the ground condition estimation section 11 is explained in more detail below with reference to particular embodiments of these sections.

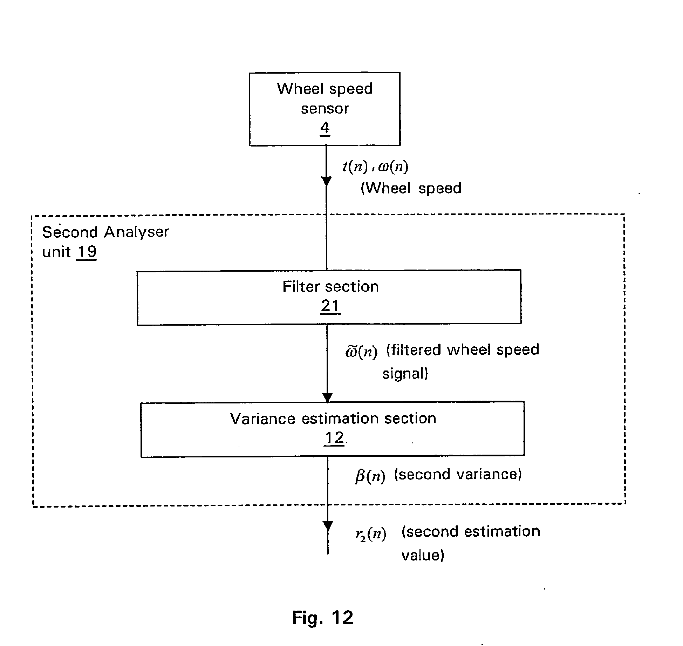

It should be noted that the above structure represents only one particular embodiment of an analyser unit 8. A second embodiment of the analyser unit is described with reference to Fig. 12 which has a different internal structure.

**Sensor imperfection estimation section**

As stated above, the sensor imperfection estimation section 9 estimates the sensor imperfections $\delta_l$ of the segmented rotary element 5 from the wheel speed signal $t(n)$.

In one embodiment of the sensor imperfection estimation section 9, the estimated sensor imperfections $\hat{\delta}_1$ are computed as weighted average values of sensor imperfection values $y(n)$ of previous $n$-1 and current revolutions $n$ of the rotary element 5.

A weighted average value may for example be obtained by a low pass filter which is implemented according to the following filter relation:

$$LP: \ \hat{\bar{\delta}}_{(n \bmod L)+1} = (1-\mu)\hat{\bar{\delta}}_{(n \bmod L)+1} + \mu y(n) \ , \qquad (\text{Eq. } 2)$$

with

$$y(n) = \frac{2\pi}{T_{LAP}(n)}(t(n)-t(n-1)) - \frac{2\pi}{L} \ , \qquad (\text{Eq. } 3)$$

wherein ($n$ mod $L$)+1 is the number of the segment 6 of the rotary element 5 which corresponds to the sample number $n$, $\hat{\delta}_{n \bmod L}$ is the estimation value of the corresponding sensor imperfection, $\mu$ is a forgetting factor of the filter, $t(n)$ and $t(n\text{-}1)$ are consecutive values of the wheel speed signal, L is the total number of segments 6 of the rotary element 5 and $T_{LAP}(n)$ is the duration of a complete revolution of the rotary element 5.

**Signal correction section**

As stated above, the signal correction section provides an imperfection-corrected sensor signal $\varepsilon(n)$ based on the wheel speed signal $t(n)$ and the sensor imperfection signal $\hat{\delta}_1$. It is important to note, that the imperfection-corrected sensor signal $\varepsilon(n)$ does not necessarily contain values which represent time instances or rotational speeds or similar quantities. It may also be any other artificial quantity which can appropriately represent an imperfection-corrected derivative of the wheel speed signal.

In one embodiment, the imperfection-corrected sensor signal $\varepsilon(n)$ is obtained from the relation

$$\varepsilon(n) = y(n) - \hat{\bar{\delta}}_{(n \bmod L)+1} \qquad (\text{Eq. } 4)$$

wherein, as for the sensor imperfection estimation section 9 (cp. above),

$$y(n) = \frac{2\pi}{T_{LAP}(n)}(t(n)-t(n-1)) - \frac{2\pi}{L}$$

wherein (nmodL)+1 is the number of the segment 6 of the rotary element 5 which corresponds to the sample number $n$, $\hat{\delta}_{(nmod L)+1}$ is the estimation value of the corresponding sensor imperfection, $\mu$ is a forgetting factor of the filter, $t(n)$ and $t(n\text{-}1)$ are consecutive values of the wheel speed signal, $L$ is the total number of segments 6 of the rotary element 5 and $T_{LAP}(n)$ is the duration of a complete revolution of the rotary element 5. Of course, if this embodiment is implemented in combination with the embodiment of the sensor imperfection estimation section it is possible to use the sensor imperfection values $\gamma(n)$ computed in the sensor imperfection estimation section 9 (cf. Eq. 3) as input to Eq. 4.

**Ground condition estimation section and subsection**

As stated above, the ground condition estimation section 11 determines the output signal of the analyser unit 8 (e.g. a first estimation value $\alpha_i(n)$) which is indicative of the road condition under the particular wheel of the vehicle 1 with which the analyser unit 8 is associated.

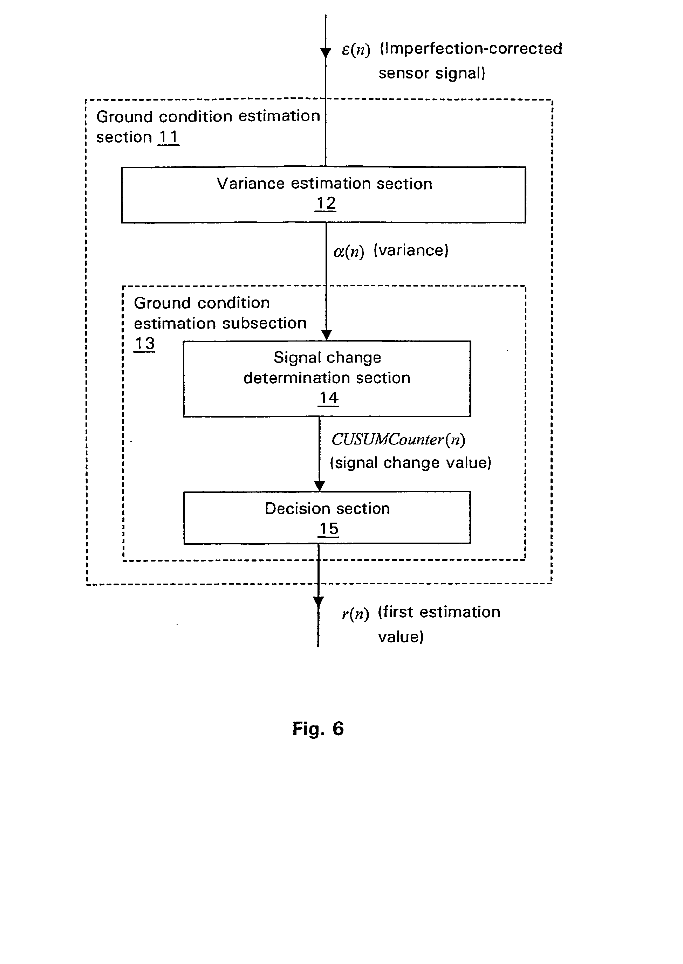

Fig. 6 schematically shows the components of an embodiment of the ground condition estimation section 11. In the embodiment of Fig. 6, the imperfection-corrected sensor signal $\varepsilon(n)$ is input to a variance estimation section 12 which derives a variance $\alpha(n)$ from the imperfection-corrected sensor signal $\varepsilon(n)$. This variance $\alpha(n)$ may then be evaluated in a ground condition estimation subsection 13 which in turn may comprise a signal change determination section 14 and a decision section 15. The signal change determination section 14 determines a signal change value *CUSUMCounter*(*n*) from the variance $\alpha$(*n*). The signal change value *CUSUMCounter*(*n*) is input to the decision section 15 which outputs the first estimation value *r(n)*.

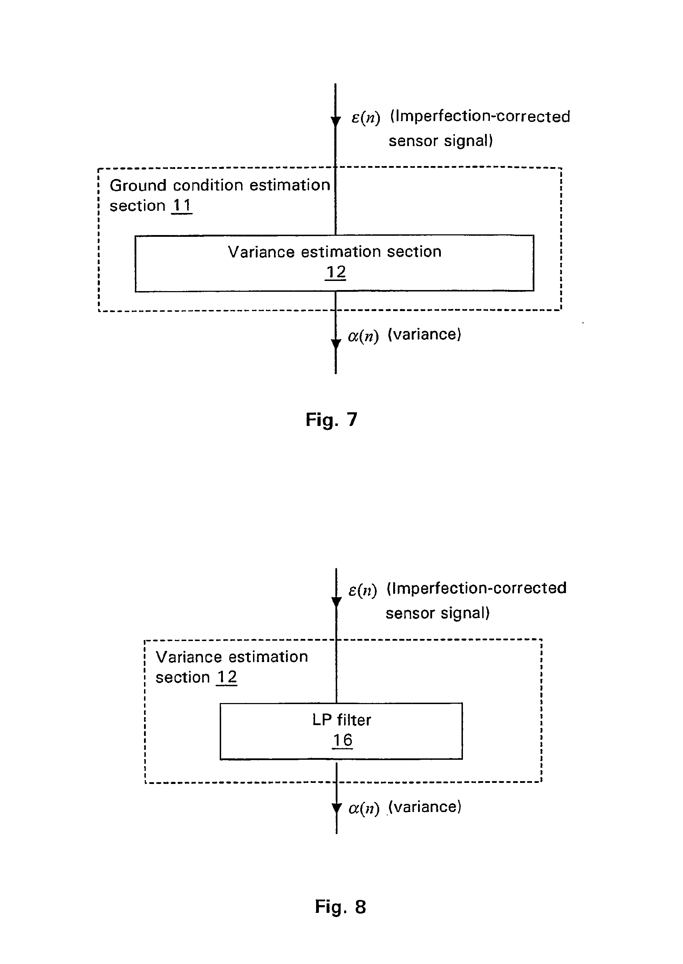

Besides, the ground condition estimation subsection 13 is not a necessary feature of the ground condition section 11. Fig. 7 for example shows an embodiment of the ground condition estimation section 11 which solely comprises a variance estimation section 12.

**Variance estimation section**

In general, the variance estimation section 12 computes a variance (here e.g. $r_2$(*n*)) on the basis of a fluctuating input signal (e.g. the imperfection-corrected sensor signal $\varepsilon$(*n*)). There are several ways of implementing the variance estimation section 12.

In Fig. 6, the variance estimation section 12 is a subsection of the ground condition estimation section 11 but it may also be a subsection of other components (cf. the embodiment of Fig. 12 in which it is a subsection of the second embodiment of the analyser unit 19).

The embodiment of the variance estimation section 12 shown in Fig. 8 determines a variance $\alpha$(*n*) on the basis of the imperfection-corrected sensor signal $\varepsilon$(*n*) by using a low pass filter 16 (it should be noted that the term "variance" as used throughout the whole application does not refer to the standard mathematical definition but to an estimation value of the variance). The low pass filter 16 may for example determine the variance $\alpha$(*n*) of the imperfection-corrected sensor signal $\varepsilon$(*n*) according to the following relation:

$$\alpha(n) = Var(\varepsilon) = LP(\varepsilon^2) - LP(\varepsilon)^2 , \qquad \text{(Eq. 5)}$$

wherein *LP($\varepsilon$)* is a low pass filtered value of the imperfection-corrected sensor signal $\varepsilon$(*n*), and *LP*($\varepsilon^2$) is a low pass filtered value of the square $\varepsilon^2$(*n*) of the imperfection-corrected sensor signal $\varepsilon$(*n*).

Here, the low pass filter 16 may be implemented according to the following filter relation:

$$LP : \; \alpha(n+1) = (1-\lambda)\alpha(n) + \lambda\varepsilon(n) , \qquad \text{(Eq. 6)}$$

wherein $\alpha$ is an estimation value of the variance *Var*($\varepsilon$), $\lambda$ is a forgetting factor of the filter, and $\varepsilon$(*n*) is the imperfection-corrected sensor signal.

**Signal change determination section**

The signal change determination section 14 in general detects signal changes in an input signal (e.g. $\alpha(n)$ or $\gamma(n)$) and to output a signal (e.g. *CUSUMCounter*(*n*)) which is indicative of changes in the input signal.

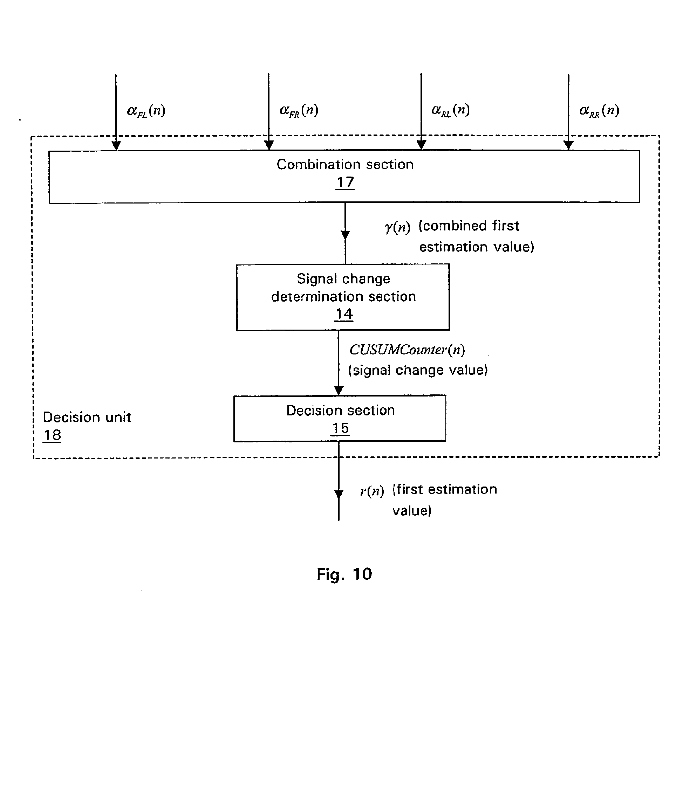

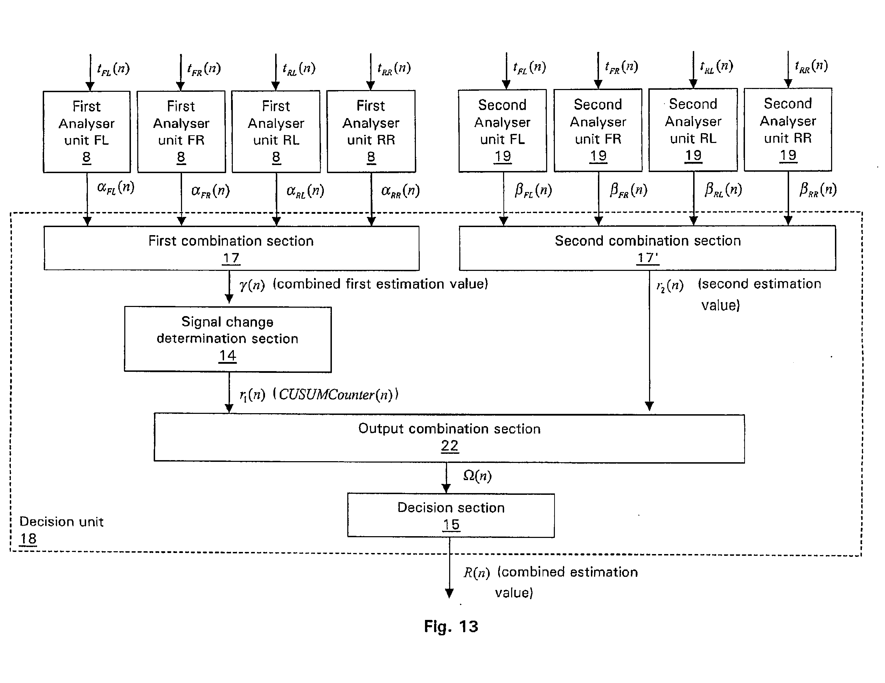

In Fig. 6, the signal change determination section 14 is a subsection of a ground condition estimation subsection 13. In another embodiment to be described below (cf. Figs. 10 and 13), it is a subsection of a decision unit 18.

In a first embodiment, the signal change determination section 14 determines signal change values (*CUSUMCounter*(*n*)) according to the following relation:

$$CUSUMCounter(n+1) = \min(\max(CUSUMCounter(n) + \alpha(n) - Drift, 0), CounterLimit) ,$$

$$\text{(Eq. 7)}$$

wherein $\alpha$(*n*) is the variance obtained from the variance determination section, and *Drift* and *Counter Limit* are tuning parameters.

**Decision section**

The decision section 15 compares input values (e.g. the signal change values *CUSUMCounter(n)*) with pre-defined threshold values in order to derive a decision on the road condition. In general, the decision section 15 is optional (its input value already contains enough information on the road condition, its output signal only helps to interpret the input signal more easily). For example, the decision section 15 may output a first signal indicating a rough road condition if the input value is higher than a threshold value, and a second signal indicating a normal road condition if the input value is lower than the threshold value. In order to avoid fluctuations of the output signal when the input signal is fluctuating in the vicinity of the one threshold value, the results of the decision section 15 are preferably based on more than one threshold value.

In the embodiment shown in Fig. 6, the decision section 15 is included in the ground condition estimation subsection 13. It may for example be designed to compare the signal change values $CUSUMCounter(n)$ from the signal change determination section 14 with a first and a second threshold value $set$ , $reset$ and to output a current first estimation value $r(n)$ indicative of a rough road condition if the signal change value $CUSUMCounter(n)$ is greater than the first threshold value $set,$ a current first estimation value $r(n)$ indicative of a normal road condition if the signal change value $CUSUMCounter(n)$ is lower than the second threshold value $reset,$ and otherwise a current first estimation value $r(n)$ which is equal to the previous first estimation value $r(n\text{-}1)$.

## System for estimating the road condition under a vehicle having four wheels

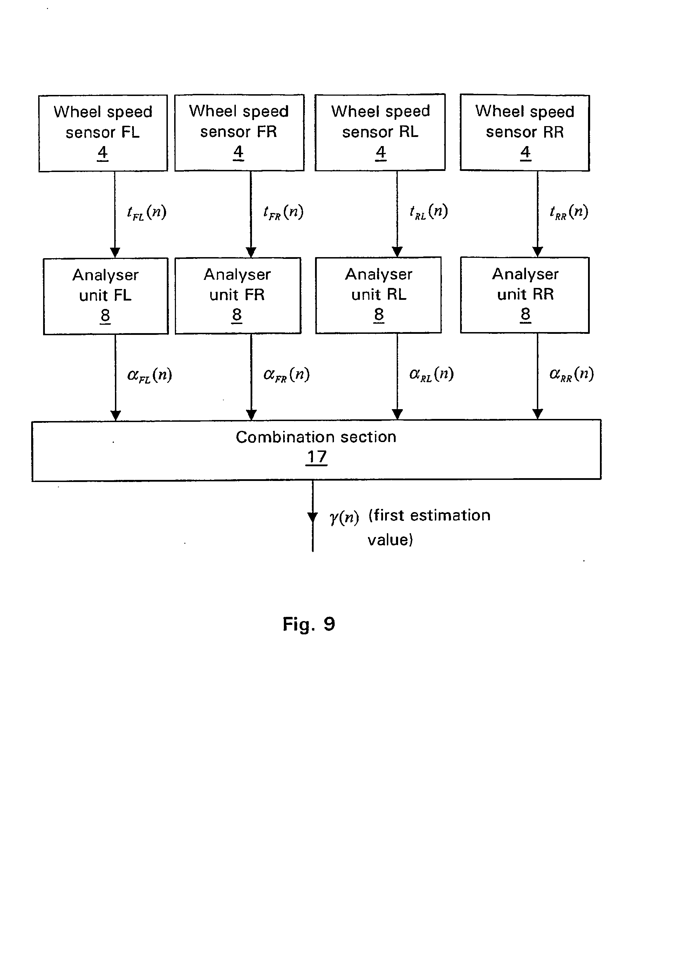

Fig. 9 and 10 present embodiments of a system for estimating the road condition under a vehicle 1 having four wheels as shown in Fig. 1. Each wheel of the vehicle 1 is equipped with a wheel speed sensor 4.

The embodiment of Fig. 9 comprises one analyser unit 8 for each wheel $i =FL,FR,RL,RR$ ($FL$ = Front-Left, $FR$ = Front-Right, $RL$ = Rear-Left, $RR$ = Rear-Right) of the vehicle 1, wherein each analyser unit 8 provides a first estimation value $\alpha_i(n)$ indicative of the ground condition under the respective wheel. A combination section 17 then combines the first estimation values $\alpha_i(n)$ provided from each of the analyser units 8 in order to obtain a combined first estimation value $\gamma(n)$ indicative of the road condition under the vehicle 1.

Fig. 10 shows an embodiment, in which the combination section 17 is included in a decision unit 18 which internally post-processes the output value $\gamma(n)$ from the combination section 17 in order to output the first estimation value $r(n)$ indicating the road condition under the vehicle. The decision unit 18 further comprises a signal change determination section 14 (cf. description above with $\alpha(n)$ replaced by $\gamma(n)$) which determines signal change values $CUSUMCounter(n)$ on the basis of the combined output value $\gamma(n)$ from the combination section 17. The signal change values $CUSUMCounter(n)$ may then be further processed in a decision section 15 to finally obtain the first estimation value $r(n)$.

This embodiment can easily be adapted to any type of vehicle comprising an arbitrary number of sensor-equipped wheels. When a wheel speed signal $t(n)$ is available for each wheel for example, then the estimation values derived thereof can be combined in a number of ways. Depending on the application, different types of tire combinations can be of interest. Some combinations of these are FL + RL to detect rough road left side, FR + RR to detect rough road right side or FR + FR + RL + RR to achieve high robustness.

### Combination section

The combination section 17 may for example be implemented by computing the average value of its input signals, e.g. of the first estimation values $\alpha_i(n)$ provided from the first analyser units 8.

Other methods of implementing the combination of the signals are conceivable. Alternatives are for instance networks of series expansion type (neural networks, radial basis function networks, fuzzy networks, etc.), min-function compared to a threshold, max-function compared to a threshold, average value compared to a threshold, or all individual signals are compared to a threshold and the decision is then made by voting. Naturally, several of the above listed alternatives can be combined.

### System for estimating the road condition with two different types of analyser units

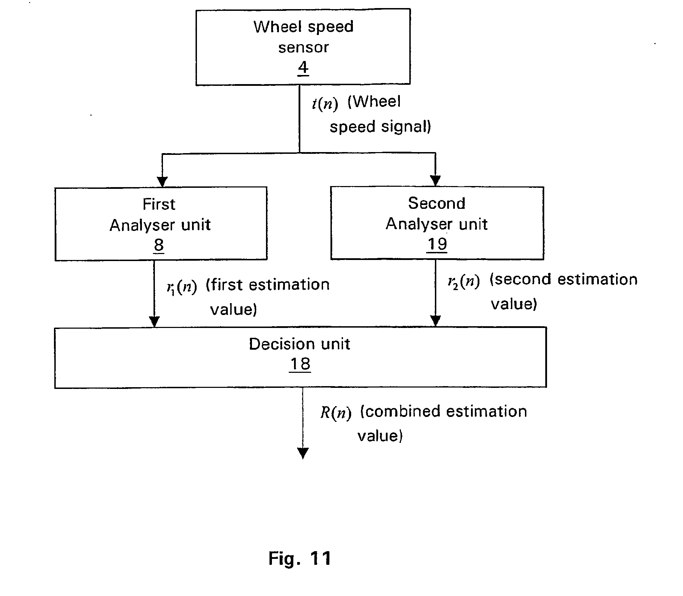

Fig. 11 shows another embodiment of the system for estimating the road condition under a vehicle. It comprises two different analyser units, a first analyser unit 8 and a second analyser unit 19, operating on the same wheel speed signals $t(n)$.

The first analyser unit 8 is associated with the wheel speed sensor 4 and determines a first estimation value $r_1(n)$ which is indicative of the ground condition on the basis of the wheel speed signal $t(n)$ received from the wheel speed sensor 4. Similarly to the first analyser unit 8, the second analyser unit 19 is associated with the wheel speed sensor 4 and determines a second estimation value $r_2(n)$ indicative of the ground condition on the basis of the wheel speed signal $t(n)$ (respectively $\omega(n)$) received from the wheel speed sensor 4.

A decision unit 18 determines a combined estimation value $R(n)$ indicative of the ground condition on the basis of the first and second estimation values $r_1(n)$, $r_2(n)$ from the first and second analyser units 8, 19, respectively.

The first and the second analyser units 8,19 may be of a different type. In this case, slight differences in their properties can help to improve the performance of the system. For instance, if a first estimation value $r_1(n)$ which is output from the first analyser unit 8 shows weaknesses in different driving situations then a combination with a second estimation value $r_2(n)$ which is output from the second analyser unit 19 may improve the detection performance. Of course, more than two analyser units can be combined.

An option is to group the signals according to their source of origin, especially if the different types of signals require different signal processing algorithms. Due to the different properties of the different types of signals they are processed using algorithms especially adapted to this signal. Two or several of the analyser units may be identical. To improve the algorithm even further quality measures can also be applied.

Second analyser unit

The second analyser unit 19 of the embodiment shown in Fig. 12 comprises a band pass or high pass filter section 21 for band pass filtering (eg. in the range of 30-60 Hz) or high pass filtering the wheel speed signal $\omega(n)$ in order to remove the low frequency content of the wheel speed signal $\omega(n)$, such as vehicle acceleration. The implementation of the high pass filter may be similar to the one described in connection with Fig. 8. The filtering is motivated by the fact that a rough road, in particular a gravel road, adds (white) noise to the frequency spectrum of the wheel speed signal $\omega(n)$. Alternatively, instead of directly using the wheel speed signals $\omega(n)$ already imperfection-corrected wheel speed signals may be used as input for the band pass or high pass filter section 21. The second analyser unit 19 further comprises a variance estimation section 12 for determining a variance value $\beta(n)$ from the filtered wheel speed signal $\tilde{\omega}(n)$, wherein the variance value $\beta(n)$ is indicative of the ground condition under the respective wheel and thus can be used as a second estimation value $r_2(n)$ which is output from the second analyser unit 19. The variance estimation section 19 may for example be similar to the one of the embodiment described in connection with Fig. 6.

Further embodiments of the second analyser unit 19 are conceivable to compute the estimation value $r(n)$. For example, a side-wise correlation may be utilized between the front (FL or FR) and the rear wheel (RL and RR, respectively) on the same side of the car 1. If the vehicle moves on a rough surface, then the correlation at a certain velocity dependant time delay will be higher. An estimation value $r(n)$ can be obtained from the relations:

$$R(n,k) = \omega_{FL}(n)\omega_{RL}(n-k)$$
$$r(n) = \max_n R(n,k) \qquad \text{(Eq. 8)}$$

wherein k is the sample number. A nominal value of k can be computed with

$$k_{nominal} = \frac{B}{v(n)}T_s \qquad \text{(Eq. 9)}$$

where B is the distance between the front and rear axle, $v(n)$ is the velocity of the vehicle, and $T_s$ is the sample period of $v$. $R(n,k)$ can then be computed in a neighbourhood to $k_{no\,min\,al}$. For more details on correlation analysis, reference is made to PCT/EP03/07282.

Alternatively, an axle-wise correlation between the left and the right side of the car 1 may be used to determine the estimation value $r(n)$. For a front wheel driven car the relation

$$r(n) = \omega_{FL}(n) - \omega_{FR}(n) - \left[\omega_{FL}(n-1) - \omega_{FR}(n-1)\right] =: a_{FL}(n) - a_{FR}(n) \qquad \text{(Eq. 10)}$$

may for example be used. The estimation value $r(n)$ is then compared to a pre-defined threshold to determine a rough road condition. Alternatively, the sum

$$r(n) = \sum_{i=FL,FR,RL,RR} Var(a_i(n)) \qquad \text{(Eq. 11)}$$

of the variance of the quantities $a_i(n)$ defined in Eq. 10 or any linear combination of a subset of the four quantities can be used. In Eq. 11, *Var* is the variance of the quantity.

In another alternative embodiment of the second analyser unit 19, the analyser unit 19 monitors the highest Fourier frequency of the wheel speed signal according to the relation

$$r(n) = \sum_k (-1)^k \omega(k) \,. \qquad\qquad (\text{Eq. 12})$$

The estimation value $r(n)$ is then compared to a pre-defined threshold to determine a rough road condition.

Yet another alternative embodiment of the second analyser unit 19 can be based on the band pass filtered wheel speed signals and the slip variance parameter obtained from a wheel radius analysis (cf. PCT/EP03/07283) and/or a road friction analysis.

**System for estimating the road condition under a vehicle having four wheels by means of two different types of analyser units**

Fig. 13 shows a further embodiment of the system for estimating the road condition under a vehicle. The embodiment is directed to a car 1 with four wheels *i=FL,FR,RL,RR* each equipped with a wheel speed sensor 4. The wheel speed sensors 4 provide the wheel speed signals $t_i(n)$ where *i=FL,FR,RL,RR* .

One first analyser unit 8 is associated with each of the wheels *i=FL,FR,RL,RR* wherein each first analyser unit 8 provides a first estimation value $\alpha_i(n)$ indicative of the ground condition under the respective wheel.

A first combination section 17 combines the first estimation values $\alpha_i(n)$ provided from each of the first analyser units 8 in order to obtain a combined first estimation value $\gamma(n)$ indicative of the road condition under the vehicle. The combined first estimation value $\gamma(n)$ is input to a signal change determination section 14 which determines signal change values *CUSUMCounter(n)* on the basis of the combined first estimation values $\gamma(n)$ according to the following relation (cf. above) :

$$CUSUMCounter(n+1) = \min(\max(CUSUMCounter(n) + \gamma(n) - Drift, 0), CounterLimit) \,,$$

wherein *Drift* and *CounterLimit* are tuning parameters.

One second analyser unit 19 is associated with each wheel *i=FL,FR,RL,RR* of the vehicle 1, wherein each second analyser unit 19 provides a second estimation value $\beta_i(n)$ indicative of the ground condition under the respective wheel.

A second combination section 17 combines the second estimation values $\beta_i(n)$ provided from each of the second analyser units 19 in order to obtain a combined second estimation value $r_2(n)$ indicative of the road condition under the vehicle.

An output combination section 22 finally combines the signal change values *CUSUMCounter(n)* and the second combined estimation values $r_2(n)$ in order to obtain a combined estimation value $\Omega(n)$ indicative of the road condition under the vehicle 1. For instance, it may simply multiply both values *CUSUMCounter*$(n)$ and $r_2(n)$. Naturally, other signal combinations are conceivable (averaging, adding, etc.). The output combination section 22 may be implemented similar to the first and second combination sections 17 and 17' as described above, in particular by a network of series expansion type (fuzzy or neural networks), designed (trained) is such a way that it outputs a value between 0 and 1, with 0 representing maximum smoothness and 1 representing maximum roughness. In general, all input values having for example values between 0 and 1 (such as $\alpha_i(n)$, $\beta_i(n)$, $y(n)$ , $r_2(n)$)) may be combined with each other according to the above procedure.

Optionally, a decision section 15 may be added in order to post-process the output signal $\Omega(n)$ of the output combination section 15. An appropriate embodiment of the decision section 15 is described above under the item "Decision section".

**Alternative embodiment of the system for estimating the road condition under a vehicle having four wheels with two different types of analyser units**

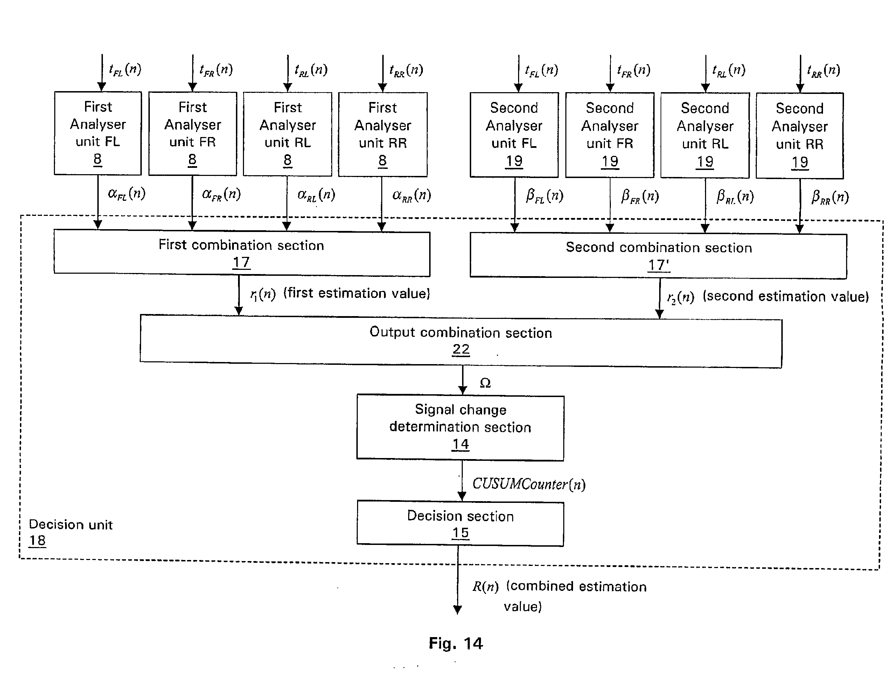

Fig. 14 shows an alternative embodiment of the above system shown in Fig. 13. It differs from the one of Fig. 13 in that the signal change determination section 14 is coupled to the output combination section 22 instead of the first combination section 17.

**Operation results**

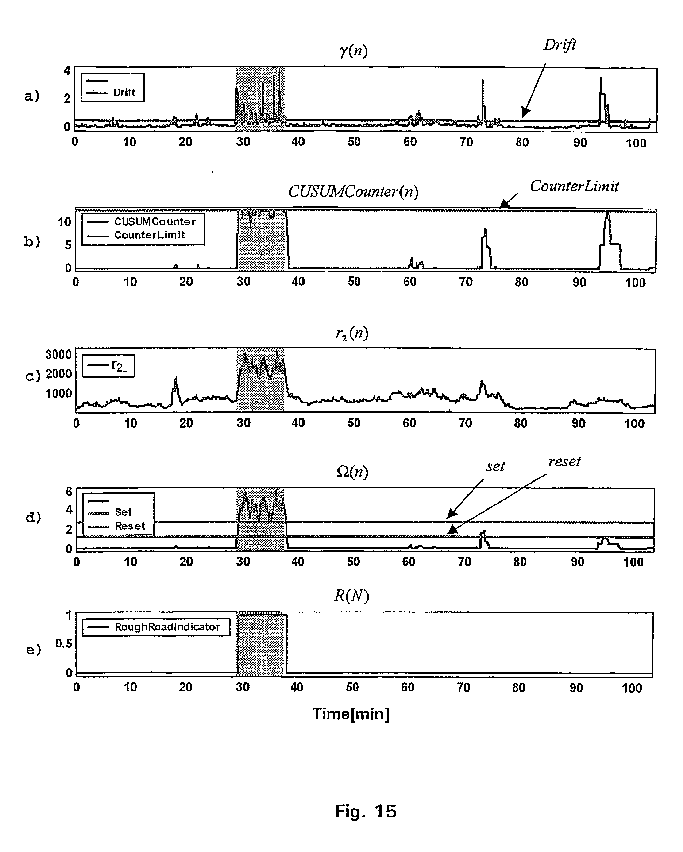

Fig. 15a-e show operation results of the system corresponding to the embodiment of Fig. 13. On the abscissas of all diagrams in Fig. 15a-e are plotted the operation time interval of around 105 minutes. On the ordinates are plotted different signal values obtained during the system operation. Since only the qualitative behaviour of the signal is relevant here, the magnitude of the plotted values is not defined and described in detail.

In the diagram of Fig. 15a, the combined first estimation value $\gamma(n)$ from the first combination section 17 is plotted as a function of the time. The diagram further shows a choice of the tuning parameter *drift* in relation to the combined first estimation value $y(n)$. As can be seen from a shaded area in the diagram which represents a rough road, the first estimation value $\gamma(n)$ is larger than the tuning parameter *drift* on a rough road, and, otherwise, smaller.

The diagram of Fig. 15b shows the signal change signal *CUSUMCounter*$(n)$ which is output from the signal change determination section 14. In principle, this signal can already be used to detect the road condition (for instance, if this signal is compared with a value *CUSUMCounter(n)* = 5 as a threshold value).

The diagram of Fig. 15c shows the combined second estimation value $r_2(n)$ which is output from the second combination section 17. Again, this signal may already be used to determine the road condition.

Fig. 15b and Fig. 15c show an interesting relation between the two signals *CUSUMCounter*$(n)$ and $r_2(n)$. They both indicate rough road correctly but do not incorrectly indicate rough road simultaneously. At 95 minutes for instance, the signal change signal *CUSUMCounter(n)* gives a strong rough road indication but this is not the case for the combined second estimation value $r_2(n)$. The opposite behaviour is present at approximately 18 minutes.

The diagram of Fig. 15d shows the product $\Omega(n)$ of the two indicators *CUSUMCounter*$(n)$ and $r_2(n)$ as well as the two thresholds *set* and *reset* used in the decision section 15. In this diagram, a rough road is correctly indicated, whereas a rough road is not falsely indicated on a smooth road.

The combined estimation value $R(n)$ output from the decision unit 18 is shown in the diagram of Fig. 15e. Clearly, the rough road condition is correctly estimated in the time range from approximately 30 to 40 min.

**Computer program**

The embodiments of the computer program products with program code for performing the described methods include any machine-readable medium that is capable of storing or encoding the program code. The term "machine-readable medium" shall accordingly be taken to include, but not to be limited to, solid state memories, optical and magnetic storage media, and carrier wave signals. The program code may be machine code or another code which can be converted into machine code by compilation and/or interpretation, such as source code in a high-level programming language, such as C++, or in any other suitable imperative or functional programming language, or virtual-machine code. The computer program product may comprise a data carrier provided with the program code or other means devised to control or direct a data processing apparatus to perform the method in accordance with the description. A data processing apparatus running the method typically includes a central processing unit, data storage means and an I/O-interface for signals or parameter values.

Thus, a general purpose of the disclosed embodiments is to provide improved methods and products which enable to more accurately determine a rough road condition by means of wheel speed sensors which are in particular already existing within common vehicle electronic systems (antilock braking system and the like).

Although certain methods and products constructed in accordance with the teachings of the invention have been described herein, the scope of coverage of this patent is not limited thereto. On the contrary, this patent covers all embodiments of the teachings of the invention falling within the scope of the appended claims.

**Claims**

**1.** System for estimating the ground condition under a driving vehicle, comprising:

- a wheel speed sensor (4) for sensing a wheel speed signal ($t(n)$ , $\omega(n)$) which is indicative of the wheel speed of a vehicle's wheel driving over the ground (2,3); and
- a first analyser unit (8) coupled to said wheel speed sensor (4) which comprises

- a sensor imperfection estimation section (9) which is designed to estimate a sensor imperfection signal ($\hat{\delta}_l$) from the wheel speed signal ($t(n)$) which is indicative of the sensor imperfection of the wheel speed sensor (4);
- a signal correction section (10) which is designed to determine an imperfection-corrected sensor signal ($\varepsilon(n)$) from the wheel speed signal ($t_n$) and the sensor imperfection signal ($\hat{\delta}_l$); and

- a ground condition estimation section (11) which is designed to estimate a first estimation value ($r(n), \alpha(n)$) indicative of the ground condition from the imperfection-corrected sensor signal ($\varepsilon(n)$).

2. The system of claim 1, wherein the wheel speed sensor (4) comprises a segmented rotary element (5), and the sensor imperfection estimation section (9) is designed to estimate, at each revolution of the rotary element (5), a sensor imperfection value ($\hat{\delta}_1$) representative of the sensor imperfection signal for each of the segments (6) of the rotary element (5).

3. The system of claim 2, wherein the sensor imperfection value. ($\hat{\delta}_l$) is a weighted average of sensor imperfection values ($y(n)$) of previous and current revolutions (n) of the rotary element.

4. The system of claim 2, wherein the sensor imperfection estimation section (9) comprises a low pass filter which is implemented according to the following filter relation:

$$LP: \ \hat{\delta}_l = (1 - \mu)\hat{\delta}_l + \mu y(n) \ ,$$

with

$$y(n) = \frac{2\pi}{T_{LAP}(n)}(t(n) - t(n-1)) - \frac{2\pi}{L}$$

wherein $\hat{\delta}_l$ is an estimation value of the sensor imperfection, $\mu$ is a forgetting factor of the filter, $t(n)$ and $t(n\text{-}1)$ is the wheel speed signal, L is the total number of segments (6) of the rotary element (5) and $T_{LAP}(n)$ is the duration of a complete revolution of the rotary element (5).

5. The system of one of the preceding claims, wherein the ground condition estimation section (11) comprises:

   - a variance determination section (12) which is designed to determine the variance ($\alpha(n)$) of the imperfection-corrected sensor signal ($\varepsilon(n)$), and
   - a ground condition estimation subsection (13) which is designed to estimate the first estimation value ($r(n)$) on the basis of the variance ($\alpha(n)$) thus determined.

6. The system of claim 5, wherein the variance determination section (12) comprises a low pass filter (16) for determining the variance ($\alpha(n)$) of the imperfection-corrected sensor signal ($\varepsilon(n)$) according to the following relation:

$$\alpha(n) = Var(\varepsilon) = LP(\varepsilon^2) - LP(\varepsilon)^2 \ ,$$

wherein $LP(\varepsilon)$ is a low pass filtered value of the imperfection-corrected sensor signal ($\varepsilon(n)$) and $LP(\varepsilon^2)$ is a low pass filtered value of the square ($\varepsilon^2(n)$) of the imperfection-corrected sensor signal ($\varepsilon(n)$).

7. The system of claim 6, wherein the low pass filter (16) is implemented according to the following filter relation:

$$LP: \ \alpha(n+1) = (1 - \lambda)\alpha(n) + \lambda\varepsilon(n) \ ,$$

wherein $\alpha$ is an estimation value of the variance $Var(\varepsilon)$, $\lambda$ is a forgetting factor of the filter, and $\varepsilon(n)$ is the imperfection-corrected sensor signal.

8. The system of claim 5, wherein the ground condition estimation subsection (13) comprises a signal change determination section (14) which is designed to determine signal change values ($CUSUMCounter(n)$) according to the following relation:

$$CUSUMCounter(n+1) = \min(\max(CUSUMCounter(n) + \alpha(n) - Drift, 0), CounterLimit) \,,$$

wherein $\alpha(n)$ is the variance obtained from the variance determination section, and *Drift* and *CounterLimit* are tuning parameters.

**9.** The system of claim 8, wherein the ground condition estimation subsection (13) further comprises a decision section (15) which is designed to compare the signal change values (*CUSUMCounter(n)*) from the signal change determination section (14) with a first and a second threshold value (*set,reset*) and to output a current first estimation value (*r(n)*) indicative of a rough road condition if the current signal change value (*CUSUMCounter(n)*) is greater than the first threshold value *(set),* a current first estimation value indicative of a normal road condition if the signal change value (*CUSUMCounter(n)*) is lower than the second threshold value (*reset*), and otherwise a current first estimation value equal to the previous first estimation value (*r(n-1)*).

**10.** The system of one of the preceding claims, which comprises:

- one first analyser unit (8) for each wheel (*i=FL,FR,RL,RR*) of the vehicle having more than one wheel, wherein each first analyser unit (8) is designed to provide a first estimation value ($\alpha_i(n)$) indicative of the ground condition under the respective wheel, and
- a combination section (17) which is designed to combine the first estimation values ($\alpha_i(n)$) provided from each of the first analyser units (8) in order to obtain a combined first estimation value ($\gamma(n)$, $I_{h1}(n)$) indicative of the road condition under the vehicle.

**11.** The system of claim 10, wherein the combined first estimation value ($\gamma(n)$, $I_{h1}(n)$) is determined by

- averaging the first estimation values ($\alpha_i(n)$) provided from each of the first analyser units (8),
- using networks of series expansion type, in particular neural networks, radial basis function networks, fuzzy networks, on the basis of the first estimation values ($\alpha_i(n)$),
- using a min-function on the basis of the first estimation values ($\alpha_i(n)$), and/or
- using a max-function on the basis of the first estimation values ($\alpha_i(n)$).

**12.** The system of claim 10 or 11, in combination with claim 8 or 9, wherein the signal change determination section (14) is coupled to the combination section (17) in order to determine the signal change value (*CUSUMCounter(n)*) on the basis of the combined first estimation value ($\gamma(n)$).

**13.** The system of one of the preceding claims, further comprising:

- a second analyser unit (19) which is associated with the wheel speed sensor (4) and designed to determine a second estimation value ($\beta(n)$) indicative of the ground condition from the wheel speed signal ($\omega(n)$) received from the wheel speed sensor (4); and
- a decision unit (18) which is designed to determine a combined estimation value (*R(n)*) indicative of the ground condition on the basis of the first and second estimation values ($\alpha(n)$, $\beta(n)$) from the first and second analyser units (8,19), respectively.

**14.** The system of claim 13, wherein the second analyser unit (19) comprises:

- a band pass or high pass filter section (21) for filtering the wheel speed signal ($\omega(n)$), and a variance estimation section (12) for determining a variance value ($\beta(n)$) from the filtered wheel speed signal ($\tilde{\omega}(n)$), wherein the variance value ($\beta(n)$) is indicative of the ground condition under the respective wheel;
- a side-wise correlation section which is designed to correlate the wheel speed signals ($\omega(n)$) of the wheels (*i = FL,FR,RL,RR*) on a first side of the vehicle (1) with the wheel speed signals ($\omega(n)$) of the wheels (*i = FL,FR, RL,RR*) on a second side of the vehicle (1), wherein the correlation value (*r(n)*) is indicative of the ground condition;
- an axle-wise correlation section which is designed to correlate the wheel speed signals ($\omega(n)$) of the wheels (*i=FL,FR,RL,RR*) on a first axle of the vehicle (1) with the wheel speed signals ($\omega(n)$) of the wheels (*i = FL,FR, RL,RR*) on a second axle of the vehicle (1), wherein the correlation value (*r(n)*) is indicative of the ground condition; or

- a frequency determination section which is designed to determine the highest Fourier frequency ($r(n)$) of the wheel speed signal ($\omega(n)$) which is indicative of the ground condition.

**15.** The system of claim 13 or 14, comprising:

- one first analyser unit (8) for each wheel (*i=FL,FR,RL,RR*) of the vehicle having more than one wheel, wherein each first analyser unit (8) is designed to provide a first estimation value ($\alpha_i(n)$) indicative of the ground condition under the respective wheel, and
- a first combination section (17) which is designed to combine the first estimation values ($\alpha_i(n)$) provided from each of the first analyser units (8) in order to obtain a combined first estimation value *(y(n))* indicative of the road condition under the vehicle;
- a signal change determination section (14) which is designed to determine signal change values (*CUSUMCounter(n)*) on the basis of the combined first estimation values ($\gamma(n)$) according to the following relation: *CUSUMCounter(n+1) = min(max(CUSUMCounter(n) + $\gamma$(n) - Drift, 0), CounterLimit)*, wherein *Drift* and *CounterLimit* are tuning parameters;
- one second analyser unit (19) for each wheel (*i=FL,FR,RL,RR*) of the vehicle, wherein each second analyser unit (19) is designed to provide a second estimation value ($\beta_i(n)$) indicative of the ground condition under the respective wheel, and
- a second combination section (17) which is designed to combine the second estimation values ($\beta_i(n)$) provided from each of the second analyser units (19) in order to obtain a combined second estimation value ($r_2(n)$) indicative of the road condition under the vehicle
- an output combination section (22) for combining the signal change values (*CUSUMCounter(n)*) and the second combined estimation values ($r_2(n)$) in order to obtain a combined estimation value ($\Omega(n)$, $R(n)$) indicative of the road condition under the vehicle.

**16.** The system of claim 13 or 14, comprising:

- one first analyser unit (8) for each wheel (*i=FL,FR,RL,RR*) of the vehicle having more than one wheel, wherein each first analyser unit (8) is designed to provide a first estimation value ($\alpha_i(n)$) indicative of the ground condition under the respective wheel, and
- a first combination section (17) which is designed to combine the first estimation values ($\alpha_i(n)$) provided from each of the first analyser units (8) in order to obtain a combined first estimation value ($r_1(n)$) indicative of the road condition under the vehicle;
- one second analyser unit (19) for each wheel (*i=FL,FR,RL,RR*) of the vehicle, wherein each second analyser unit (19) is designed to provide a second estimation value ($\beta_i(n)$) indicative of the ground condition under the respective wheel, and
- a second combination section (17) which is designed to combine the second estimation values *(*$\beta_i(n)$) provided from each of the second analyser units (19) in order to obtain a combined second estimation value ($r_2(n)$) indicative of the road condition under the vehicle
- an output combination section (22) for combining the first and second combined estimation values ($r_1(n)$, $r_2(n)$) in order to obtain a combined estimation value ($\Omega(n)$) indicative of the road condition under the vehicle; and
- a signal change determination section (14) which is designed to determine signal change values (*CUSUMCounter(n)*) on the basis of the combined estimation values ($\Omega(n)$) from the output combination section (22) according to the following relation:

$$CUSUMCounter(n+1) = \min(\max(CUSUMCounter(n) + \Omega(n) - Drift, 0), CounterLimit) \text{,}$$

wherein *Drift* and *CounterLimit* are tuning parameters.

**17.** The system of claim 15 or 16, further comprising a decision section (15) according to claim 9.

**18.** Method for estimating the ground condition under a driving vehicle, comprising the steps of:

- sensing a wheel speed signal ($t(n)$, $\omega(n)$) by means of a wheel speed sensor (4) which is indicative of the wheel speed of a vehicle's wheel driving over the ground (2,3); and
- estimating a sensor imperfection signal ($\hat{\delta}_1$) from the wheel speed signal *(t(n))* which is indicative of the sensor imperfection of the wheel speed sensor (4);
- determining an imperfection-corrected sensor signal ($\varepsilon(n)$) from the wheel speed signal ($t(n)$) and the sensor imperfection signal ($\hat{\delta}_l$); and
- estimating a first estimation value ($r(n)$, $\alpha(n)$) indicative of the ground condition from the imperfection-corrected sensor signal ($\varepsilon(n)$).

19. The method of claim 18, wherein the step of estimating the sensor imperfection signal ($\hat{\delta}_l$) from the wheel speed signal ($t(n)$) comprises estimating, at each revolution of the rotary element (5), a sensor imperfection value ($\hat{\delta}_1$) representative of the sensor imperfection signal for each of the segments (6) of a rotary element (5).

20. The method of claim 19, wherein the sensor imperfection value ($\hat{\delta}_1$) is a weighted average of sensor imperfection values ($y(n)$) of previous and current revolutions ($n$) of the rotary element.

21. The method of claim 19, wherein the step of estimating the sensor imperfection signal ($\hat{\delta}_1$) from the wheel speed signal ($t(n)$) comprises a step of low pass filtering according to the following filter relation:

$$LP: \ \hat{\delta}_l = (1-\mu)\hat{\delta}_l + \mu y(n) \ ,$$

wherein

$$y(n) = \frac{2\pi}{T_{LAP}(n)}(t(n) - t(n-1)) - \frac{2\pi}{L}$$

wherein $\hat{\delta}_1$ is an estimation value of the sensor imperfection, $\mu$ is a forgetting factor of the filter, $t(n)$ and $t(n-1)$ is the wheel speed signal, L is the total number of segments (6) of the rotary element (5) and $T_{LAP}(n)$ is the duration of a complete revolution of the rotary element (5).

22. The method of one of the preceding claims, further comprising the steps of:

- determining a variance ($\alpha(n)$) of the imperfection-corrected sensor signal ($\varepsilon(n)$), and
- estimating the first estimation value ($r(n)$) on the basis of the variance ($\alpha(n)$) thus determined.

23. The method of claim 22, wherein the step of determining a variance ($\alpha(n)$) of the imperfection-corrected sensor signal ($\varepsilon(n)$) comprises the step of low pass filtering the imperfection-corrected sensor signal ($\varepsilon(n)$) according to the following relation:

$$\alpha(n) = Var(\varepsilon) = LP(\varepsilon^2) - LP(\varepsilon)^2 \ ,$$

wherein $LP(\varepsilon)$ is a low pass filtered value of the imperfection-corrected sensor signal ($\varepsilon(n)$) and $LP(\varepsilon^2)$ is a low pass filtered value of the square ($\varepsilon^2(n)$) of the imperfection-corrected sensor signal ($\varepsilon(n)$).

24. The method of claim 23, wherein the low pass filtering is implemented according to the following filter relation:

$$LP: \ \alpha(n+1) = (1-\lambda)\alpha(n) + \lambda\varepsilon(n) \ ,$$

wherein $\alpha$ is an estimation value of the variance $Var(\varepsilon)$, $\lambda$ is a forgetting factor of the filter, and $\varepsilon(n)$ is the imperfection-corrected sensor signal.

25. The method of one of the preceding claims, further comprising the step of determining signal change values *(CUSUMCounter(n))* according to the following relation:

$$CUSUMCounter(n+1) = \min(\max(CUSUMCounter(n) + \alpha(n) - Drift, 0), CounterLimit) ,$$

wherein $\alpha(n)$ is the variance obtained from the variance determination section, and *Drift* and *CounterLimit* are tuning parameters.

**26.** The method of claim 25, further comprising to compare the signal change values *(CUSUMCounter(n))* with a first and a second threshold value *(set,reset)* and to output a current first estimation value *(r(n))* indicative of a rough road condition if the current signal change value *(CUSUMCounter(n))* is greater than the first threshold value *(set),* a current first estimation value indicative of a normal road condition if the signal change value *(CUSUMCounter(n))* is lower than the second threshold value *(reset),* and otherwise a current first estimation value equal to the previous first estimation value *(r(n-1))*.

**27.** The method of one of the preceding claims, further comprising:

- providing a first estimation value $(\alpha_i(n))$ indicative of the ground condition under the respective wheel for each wheel *(i=FL,FR,RL,RR)* of the vehicle having more than one wheel, and
- combining the first estimation values $(\alpha_i(n))$ in order to obtain a combined first estimation value $(\gamma(n), I_{h1}(n))$ indicative of the road condition under the vehicle.

**28.** The method of claim 27, wherein the combined first estimation value $(\gamma(n), I_{h1}(n))$ is determined by

- averaging the first estimation values $(\alpha_i(n))$ provided from each of the first analyser units (8),
- using networks of series expansion type, in particular neural networks, radial basis function networks, fuzzy networks, on the basis of the first estimation values $(\alpha_i(n))$,
- using a min-function on the basis of the first estimation values $(\alpha_i(n))$, and/or
- using a max-function on the basis of the first estimation values $(\alpha_i(n))$.

**29.** The method of claim 27 or 28, in combination with claim 25 or 26, wherein a signal change value *(CUSUMCounter (n))* is determined on the basis of the combined first estimation value $(\gamma(n))$.

**30.** The method of one of the preceding claims, further comprising:

- determine a second estimation value $(\beta(n))$ indicative of the ground condition from the wheel speed signal $(\omega(n))$ received from the wheel speed sensor (4); and
- determining a combined estimation value *(R(n))* indicative of the ground condition on the basis of the first and second estimation values $(\alpha(n), \beta(n))$.

**31.** The method of claim 30, further comprising:

- filtering the wheel speed signal $(\omega(n))$ with a band pass or high pass filter, and determining a variance value $(\beta(n))$ from the filtered wheel speed signal $(\tilde{\omega}(n))$, wherein the variance value $(\beta(n))$ is indicative of the ground condition under the respective wheel;
- correlating the wheel speed signals $(\omega(n))$ of the wheels *(i=FL,FR,RL,RR)* on a first side of the vehicle (1) with the wheel speed signals $(\omega(n))$ of the wheels *(i=FL,FR,RL,RR)* on a second side of the vehicle (1), wherein the correlation value *(r(n))* is indicative of the ground condition;
- correlating the wheel speed signals $(\omega(n))$ of the wheels *(i=FL,FR,RL,RR)* on a first axle of the vehicle (1) with the wheel speed signals $(\omega(n))$ of the wheels *(i=FL,FR,RL,RR)* on a second axle of the vehicle (1), wherein the correlation value *(r(n))* is indicative of the ground condition; or
- determining the highest Fourier frequency *(r(n))* of the wheel speed signal $(\omega(n))$ which is indicative of the ground condition.

**32.** The method of claim 30 or 31, comprising the steps of:

- providing a first estimation value $(\alpha_i(n))$ indicative of the ground condition under the respective wheel, for each wheel *(i=FL,FR,RL,RR)* of the vehicle having more than one wheel; and
- combining the first estimation values $(\alpha_i(n))$ in order to obtain a combined first estimation value $(\gamma(n))$ indicative

of the road condition under the vehicle;
- determining signal change values (*CUSUMCounter*(*n*)) on the basis of the combined first estimation values (y(*n*)) according to the following relation:

$$CUSUMCounter(n+1) = \min(\max(CUSUMCounter(n) + \gamma(n) - Drift, 0), CounterLimit) \; ,$$

wherein *Drift* and *CounterLimit* are tuning parameters;
- providing a second estimation value ($\beta_i$(*n*)) indicative of the ground condition under the respective wheel, for each wheel (*i = FL,FR,RL,RR*) of the vehicle; and
- combining the second estimation values ($\beta_i$(*n*)) in order to obtain a combined second estimation value ($r_2$(*n*)) indicative of the road condition under the vehicle;
- combining the signal change values (*CUSUMCounter*(*n*)) and the second combined estimation values ($r_2$(*n*)) in order to obtain a combined estimation value ($\Omega$(*n*), *R*(*n*)) indicative of the road condition under the vehicle.

**33.** The method of claim 30 or 31, comprising:

- for each wheel (*i=FL,FR,RL,RR*) of the vehicle having more than one wheel, providing a first estimation value ($\alpha_i$(*n*)) indicative of the ground condition under the respective wheel; and
- combining the first estimation values ($\alpha_i$(*n*)) in order to obtain a combined first estimation value ($r_1$(*n*)) indicative of the road condition under the vehicle;
- for each wheel (*i=FL,FR,RL,RR*) of the vehicle, providing a second estimation value *(*$\beta_i$(*n*)) indicative of the ground condition under the respective wheel; and
- combining the second estimation values ($\beta_i$(*n*)) in order to obtain a combined second estimation value ($r_2$(*n*)) indicative of the road condition under the vehicle
- combining the first and second combined estimation values ($r_1$(*n*), $r_2$(*n*)) in order to obtain a combined estimation value ($\Omega$(*n*)) indicative of the road condition under the vehicle; and
- determining signal change values *(CUSUMCounter*(*n*)) on the basis of the combined estimation values ($\Omega$(*n*)) according to the following relation:

$$CUSUMCounter(n+1) = \min(\max(CUSUMCounter(n) + \Omega(n) - Drift, 0), CounterLimit)$$

, wherein *Drift* and *CounterLimit* are tuning parameters.

**34.** The method of claims 32 or 33, further comprising the steps of claim 26.

**35.** A computer program including program code for carrying out a method, when executed on a processing system, of estimating the ground condition under a driving vehicle, the method comprising the steps of:

- sensing a wheel speed signal (*t*(*n*), $\omega$(*n*)) by means of a wheel speed sensor (4) which is indicative of the wheel speed of a vehicle's wheel driving over the ground (2,3); and
- estimating a sensor imperfection signal ($\hat{\delta}_l$) from the wheel speed signal (*t*(*n*)) which is indicative of the sensor imperfection of the wheel speed sensor (4);
- determining an imperfection-corrected sensor signal ($\varepsilon$(*n*)) from the wheel speed signal (*t*(*n*)) and the sensor imperfection signal ($\hat{\delta}_l$); and
- estimating a first estimation value (*r*(*n*),$\alpha$(*n*)) indicative of the ground condition from the imperfection-corrected sensor signal ($\varepsilon$(*n*)).

**Patentansprüche**

**1.** System zum Abschätzen des Bodenzustands unter einem fahrenden Fahrzeug, umfassend:

- einen Raddrehzahlsensor (4) zum Ermitteln eines Raddrehzahlsignals (*t*(*n*),$\omega$(*n*))*,* das die Raddrehzahl eines Rades des Fahrzeugs angibt, das über den Boden (2, 3) fährt; und

- eine mit dem Raddrehzahlsensor (4) gekoppelte erste Analyseeinheit (8), die umfasst

- einen Sensorfehlerabschätzungsabschnitt (9), der ausgelegt ist, um ein Sensorfehlersignal ($\hat{\delta}_l$) aus dem Raddrehzahlsignal ($t(n)$) abzuschätzen, das den Sensorfehler des Raddrehzahlsensors (4) angibt;
- einen Signalkorrekturabschnitt (10), der ausgelegt ist, um ein fehlerkorrigiertes Sensorsignal ($\varepsilon(n)$) aus dem Raddrehzahlsignal ($t_n$) und dem Sensorfehlersignal ($\hat{\delta}_l$) zu bestimmen; und
- einen Bodenzustandsabschätzungsabschnitt (11), der ausgelegt ist, um aus dem fehlerkorrigierten Sensorsignal ($\varepsilon(n)$) einen ersten Schätzwert ($r(n)$, $\alpha(n)$) abzuschätzen, der den Bodenzustand angibt.

2. System nach Anspruch 1, bei dem der Raddrehzahlsensor (4) ein segmentiertes rotierendes Element (5) aufweist, und der Sensorfehlerabschätzungsabschnitt (9) ausgelegt ist, mit jeder Umdrehung des rotierenden Elements (5) für jedes der Segmente (6) des rotierenden Elements (5) einen Sensorfehlerwert ($\hat{\delta}_l$) abzuschätzen, der für das Sensorfehlersignal steht.

3. System nach Anspruch 2, bei dem der Sensorfehlerwert ($\hat{\delta}_l$) ein gewichteter Mittelwert der Sensorfehlerwerte ($y(n)$) von vorhergehenden und aktuellen Umdrehungen ($n$) des rotierenden Elements ist.

4. System nach Anspruch 2, bei dem der Sensorfehlerabschätzungsabschnitt (9) einen Tiefpaßfilter umfasst, der gemäß folgender Filterrelation implementiert ist:

$$LP: \ \hat{\delta}_l = (1-\mu)\hat{\delta}_l + \mu\, y(n) \ ,$$

mit

$$y(n) = \frac{2\pi}{T_{LAP}(n)}(t(n) - t(n-1)) - \frac{2\pi}{L}$$

wobei $\hat{\delta}_1$ ein Schätzwert des Sensorfehlers ist, $\mu$ ein Vergessensfaktor des Filters ist, $t(n)$ und $t(n\text{-}1)$ das Raddrehzahlsignal ist, L die Gesamtzahl an Segmenten (6) des rotierenden Elements (5) ist und $T_{LAP}(n)$ die Dauer einer kompletten Umdrehung des rotierenden Elements (5) ist.

5. System nach einem der vorstehenden Ansprüche, bei dem der Bodenzustandsabschätzungsabschnitt (11) umfasst:

- einen Varianzbestimmungsabschnitt (12), der ausgelegt ist, um die Varianz ($\alpha(n)$) des fehlerkorrigierten Sensorsignals ($\varepsilon(n)$) zu bestimmen, und
- einen Bodenzustandsabschätzungsunterabschnitt (13), der ausgelegt ist, um den ersten Schätzwert ($r(n)$) auf Grundlage der so bestimmten Varianz ($\alpha(n)$) abzuschätzen.

6. System nach Anspruch 5, bei dem der Varianzbestimmungsabschnitt (12) einen Tiefpaßfilter (16) umfasst, um die Varianz ($\alpha(n)$) des fehlerkorrigierten Sensorsignals ($\varepsilon(n)$) gemäß folgender Relation zu bestimmen:

$$\alpha(n) = Var(\varepsilon) = LP(\varepsilon^2) - LP(\varepsilon)^2 \ ,$$

wobei $LP(\varepsilon)$ ein Tiefpaß-gefilterter Wert des fehlerkorrigierten Sensorsignals ($\varepsilon(n)$) ist und $LP(\varepsilon^2)$ ein Tiefpaß-gefilterter Wert des Quadrats ($\varepsilon^2(n)$) des fehlerkorrigierten Sensorsignals ($\varepsilon(n)$) ist.

7. System nach Anspruch 6, bei dem der Tiefpaßfilter (16) gemäß folgender Filterrelation implementiert ist:

$$LP: \ \alpha(n+1) = (1-\lambda)\alpha(n) + \lambda\varepsilon(n) \ ,$$

wobei $\alpha$ ein Schätzwert der Varianz *Var*($\epsilon$) ist, $\lambda$ ein Vergessensfaktor des Filters ist, und $\epsilon$(*n*) das fehlerkorrigierte Sensorsignal ist.

**8.** System nach Anspruch 5, bei dem der Bodenzustandsabschätzungsunterabschnitt (13) einen Signaländerungsbestimmungsabschnitt (14) umfasst, der ausgelegt ist, um Signaländerungswerte (*CUSUMCounter(n)*) gemäß folgender Relation zu bestimmen:

$$CUSUMCounter(n+1) = \min(\max(CUSUMCounter(n) + \alpha(n) - Drift, 0), CounterLimit) \text{ ,}$$

wobei $\alpha$(*n*) die von dem Varianzbestimmungsabschnitt erhaltene Varianz ist und *Drift* und *CounterLimit* Abstimmparameter sind.

**9.** System nach Anspruch 8, bei dem der Bodenzustandsabschätzungsunterabschnitt (13) ferner einen Entscheidungsabschnitt (15) umfasst, der ausgelegt ist, um die Signaländerungswerte (*CUSUMCounrer(n)*) von dem Signaländerungsbestimmungsabschnitt (14) mit einem ersten und einem zweiten Schwellwert *(set,reset)* zu vergleichen und einen aktuellen ersten Schätzwert *(r(n))* auszugeben, der einen Unebene-Straße-Zustand angibt falls der aktuelle Signaländerungswert (*CUSUMCounter(n)*) größer ist als der erste Schwellwert (*set*), einen aktuellen ersten Schätzwert, der einen Normal-Straße-Zustand angibt falls der Signaländerungswert (*CUSUMCounter(n)*) kleiner ist als der zweite Schwellwert *(reset),* und ansonsten einen aktuellen ersten Schätzwert ausgibt, der gleich dem vorhergehenden ersten Schätzwert (*r(n*-1)) ist.

**10.** System nach einem der vorstehenden Ansprüche, das umfasst:

- eine erste Analyseeinheit (8) für jedes Rad (*i=FL,FR,RL,RR*) des Fahrzeugs mit mehr als einem Rad,

wobei jede erste Analyseeinheit (8) ausgelegt ist, um einen ersten Schätzwert ($\alpha_i$(*n*)) bereitzustellen, der den Bodenzustand unter dem jeweiligen Rad angibt, und

- einen Kombinierungsabschnitt (17), der ausgelegt ist, um die von den ersten Analyseeinheiten (8) bereitgestellten ersten Schätzwerte ($\alpha_i$(*n*)) zu kombinieren, um einen kombinierten ersten Schätzwert ($\gamma$(*n*), $I_{h1}$(*n*)) zu erhalten, der den Straßenzustand unter dem Fahrzeug angibt.

**11.** System nach Anspruch 10, bei dem der kombinierte erste Schätzwert ($\gamma$(*n*), $I_{h1}$(*n*)) bestimmt wird durch:

- Mitteln der von den ersten Analyseeinheiten (8) bereitgestellten ersten Schätzwerte ($\alpha_i$(*n*)),
- Verwenden von Netzwerken des Reihenentwicklungstyps, insbesondere neuronale Netzwerke, Radialbasisfunktionennetzwerke, Fuzzy-Netzwerke, auf Grundlage der ersten Schätzwerte ($\alpha_i$(*n*)),
- Verwenden einer min-Funktion auf Grundlage der ersten Schätzwerte ($\alpha_i$(*n*)), und/oder
- Verwenden einer max-Funktion auf Grundlage der ersten Schätzwerte ($\alpha_i$(*n*)).

**12.** System nach Anspruch 10 oder 11, in Kombination mit Anspruch 8 oder 9, wobei der Signaländerungsbestimmungsabschnitt (14) mit dem Kombinierungsabschnitt (17) gekoppelt ist, um den Signaländerungswert (*CUSUMCounter (n)*) auf Grundlage des kombinierten ersten Schätzwerts ($\gamma$(*n*)) zu bestimmen.

**13.** System nach einem der vorstehenden Ansprüche, das ferner umfasst:

- eine zweite Analyseeinheit (19), die mit dem Raddrehzahlsensor (4) verknüpft ist und ausgelegt ist, um aus dem vom Raddrehzahlsensor (4) empfangenen Raddrehzahlsignal ($\omega$(*n*)) einen zweiten Schätzwert ($\beta$(*n*)) zu bestimmen, der den Bodenzustand angibt; und
- eine Entscheidungseinheit (18), die ausgelegt ist, um einen kombinierten Schätzwert (*R*(*n*)) zu bestimmen, der den Bodenzustand auf Grundlage des ersten und des zweiten Schätzwerts ($\alpha$(*n*), $\beta$(*n*)) von der ersten beziehungsweise der zweiten Analyseeinheit (8, 19) angibt.

**14.** System nach Anspruch 13, bei dem die zweite Analyseeinheit (19) umfasst:

- einen Bandpaß- oder Hochpaßfilterabschnitt (21) zum Filtern des Raddrehzahlsignals ($\omega$(*n*)), sowie einen Varianzabschätzungsabschnitt (12) zum Bestimmen eines Varianzwerts ($\beta$(*n*)) aus dem gefilterten Raddreh-

zahlsignal ($\tilde{\omega}(n)$), wobei der Varianzwert ($\beta(n)$) den Bodenzustand unter dem entsprechenden Rad angibt;
- einen Seiten-weisen Korrelationsabschnitt, der ausgelegt ist, um die Raddrehzahlsignale ($\omega(n)$) der Räder ($i=FL,FR,RL,RR$) auf einer ersten Seite des Fahrzeugs (1) mit den Raddrehzahlsignalen ($\omega(n)$) der Räder ($i=FL, FR,RL,RR$) auf einer zweiten Seite des Fahrzeugs (1) zu korrelieren, wobei der Korrelationswert ($r(n)$) den Bodenzustand angibt;
- einen Achsen-weisen Korrelationsabschnitt, der ausgelegt ist, um die Raddrehzahlsignale ($\omega(n)$) der Räder ($i = FL,FR,RL,RR$) auf einer ersten Achse des Fahrzeugs (1) mit den Raddrehzahlsignalen ($\omega(n)$) des Fahrzeugs ($i = FL,FR,RL,RR$) auf einer zweiten Achse des Fahrzeugs (1) zu korrelieren, wobei der Korrelationswert ($r(n)$) den Bodenzustand angibt; oder
- einen Frequenzbestimmungsabschnitt, der ausgelegt ist, um die höchste Fourier-Frequenz ($r(n)$) des Raddrehzahlsignals ($\omega(n)$) zu bestimmen, welche den Bodenzustand angibt.

**15.** System nach Anspruch 13 oder 14, umfassend:

- eine erste Analyseeinheit (8) für jedes Rad ($i=FL,FR,RL,RR$) des Fahrzeugs mit mehr als einem Rad,

wobei jede Analyseeinheit (8) ausgelegt ist, um einen ersten Schätzwert ($\alpha_i(n)$) bereitzustellen, der den Bodenzustand unter dem jeweiligen Rad angibt, und

- einen ersten Kombinierungsabschnitt (17), der ausgelegt ist, um die von den ersten Analyseeinheiten (8) bereitgestellten ersten Schätzwerte ($\alpha_i(n)$) zu kombinieren, um einen kombinierten ersten Schätzwert ($\gamma(n)$) zu erhalten, der den Straßenzustand unter dem Fahrzeug angibt;
- einen Signaländerungsbestimmungsabschnitt (14), der ausgelegt ist, um Signaländerungswerte (*CUSUMCounter*($n$)) auf Grundlage der kombinierten ersten Schätzwerte ($\gamma(n)$) gemäß folgender Relation zu bestimmen:

$$CUSUMCounter(n+1) = \min(\max(CUSUMCounter(n) + \gamma(n) - Drift, 0), CounterLimit),$$

wobei *Drift* und *CounterLimit* Abstimmparameter sind;

- eine zweite Analyseeinheit (19) für jedes Rad ($i=FL,FR,RL,RR$) des Fahrzeugs, wobei jede zweite Analyseeinheit (19) ausgelegt ist, um einen zweiten Schätzwert ($\beta_i(n)$) bereitzustellen, der den Bodenzustand unter dem jeweiligen Rad anzugeben, und
- einen zweiten Kombinierungsabschnitt (17), der ausgelegt ist, um die von den zweiten Analyseeinheiten (19) bereitgestellten zweiten Schätzwerte ($\beta_i(n)$) zu kombinieren, um einen kombinierten zweiten Schätzwert ($r_2(n)$) zu erhalten, der den Straßenzustand unter dem Fahrzeug angibt,
- einen Ausgabekombinierungsabschnitt (22) zum Kombinieren der Signaländerungswerte (*CUSUMCounter*($n$)) und der zweiten kombinierten Schätzwerte ($r_2(n)$), um einen kombinierten Schätzwert ($\Omega(n)$, $R(n)$) zu erhalten, der den Straßenzustand unter dem Fahrzeug angibt.

**16.** System nach Anspruch 13 oder 14, umfassend:

- eine erste Analyseeinheit (8) für jedes Rad ($i=FL,FR,RL,RR$) des Fahrzeugs mit mehr als einem Rad,

wobei jede erste Analyseeinheit (8) ausgelegt ist, um einen ersten Schätzwert ($\alpha_i(n)$) bereitzustellen, der den Bodenzustand unter dem jeweiligen Rad angibt und

- einen ersten Kombinierungsabschnitt (17), der ausgelegt ist, um die von den ersten Analyseeinheiten (8) bereitgestellten ersten Schätzwerte ($\alpha_i(n)$) zu kombinieren, um einen kombinierten ersten Schätzwert ($r_1(n)$) zu erhalten, der den Straßenzustand unter dem Fahrzeug angibt;
- eine zweite Analyseeinheit (19), für jedes Rad ($i=FL,FR,RL,RR$) des Fahrzeugs, wobei jede zweite Analyseeinheit (19) ausgelegt ist, um einen zweiten Schätzwert ($\beta_i(n)$) bereitzustellen, der den Bodenzustand unter dem jeweiligen Rad angibt, und
- einen zweiten Kombinierungsabschnitt (17), der ausgelegt ist, um die von den zweiten Analyseeinheiten (19) bereitgestellten zweiten Schätzwerte ($\beta_i(n)$) zu kombinieren, um einen kombinierten zweiten Schätzwert ($r_2(n)$) zu erhalten, der den Straßenzustand unter dem Fahrzeug angibt
- einen Ausgabekombinierungsabschnitt (22) zum Kombinieren des ersten und des zweiten kombinierten

Schätzwertes ($r_1(n)$, $r_2(n)$), um einen kombinierten Schätzwert ($\Omega(n)$) zu erhalten, der den Straßenzustand unter dem Fahrzeug angibt; und
- einen Signaländerungsbestimmungsabschnitt (14), der ausgelegt ist, um Signaländerungswerte (*CUSUMCounter*($n$)) auf Grundlage der kombinierten Schätzwerte ($\Omega(n)$) von dem Ausgabekombinierungsabschnitt (22) gemäß der folgenden Relation zu bestimmen:

$$CUSUMCounter(n+1) = \min(\max(CUSUMCounter(n) + \Omega(n) - Drift, 0), CounterLimit),$$

wobei *Drift* und *CounterLimit* Abstimmparameter sind.

**17.** System nach Anspruch 15 oder 16, das ferner einen Entscheidungsabschnitt (15) nach Anspruch 9 umfasst.

**18.** Verfahren zum Abschätzen des Bodenzustands unter einem fahrenden Fahrzeug, umfassend die Schritte:

- Ermitteln eines Raddrehzahlsignals ($t(n),\omega(n)$) mittels eines Raddrehzahlsensors (4), das die Raddrehzahl des Rads eines Fahrzeugs angibt, das über den Boden (2, 3) fährt; und
- Abschätzen eines Sensorfehlersignals ($\hat{\delta}_1$) aus dem Raddrehzahlsignal ($t(n)$), das den Sensorfehler des Raddrehzahlsensors (4) angibt;
- Bestimmen eines fehlerkorrigierten Sensorsignals ($\varepsilon(n)$) aus dem Raddrehzahlsignal ($t(n)$) und dem Sensorfehlersignal ($\hat{\delta}_l$); und
- Abschätzen eines ersten Schätzwerts ($r(n)$, $\alpha(n)$) aus dem fehlerkorrigierten Sensorsignal ($\varepsilon(n)$), der den Bodenzustand angibt.

**19.** Verfahren nach Anspruch 18, bei dem der Schritt des Abschätzens des Sensorfehlersignals ($\hat{\delta}_l$) aus dem Raddrehzahlsignal ($t(n)$) das Abschätzen eines Sensorfehlerwerts ($\hat{\delta}_l$) bei jeder Umdrehung des Drehelements (5) umfasst, der für das Sensorfehlersignal für jedes der Segmente (6) eines rotierenden Elements (5) steht.

**20.** Verfahren nach Anspruch 19, wobei der Sensorfehlerwert ($\hat{\delta}_1$) ein gewichteter Mittelwert von Sensorfehlerwerten ($\gamma(n)$) von vorhergehenden und aktuellen Umdrehungen ($n$) des rotierenden Elements ist.

**21.** Verfahren nach Anspruch 19, wobei der Schritt des Abschätzens des Sensorfehlersignals ($\hat{\delta}_l$) aus dem Raddrehzahlsignal ($t(n)$) einen Schritt des Tiefpaß-Filterns gemäß folgender Filterrelation umfasst:

$$LP: \ \hat{\delta}_l = (1-\mu)\hat{\delta}_l + \mu y(n),$$

wobei

$$y(n) = \frac{2\pi}{T_{LAP}(n)}(t(n) - t(n-1)) - \frac{2\pi}{L}$$

wobei $\hat{\delta}_l$ ein Schätzwert des Sensorfehlers ist, $\mu$ ein Vergessensfaktor des Filters ist, $t(n)$ und $t(n$-1) das Raddrehzahlsignal ist, L die Gesamtzahl an Segmenten (6) des rotierenden Elements (5) ist und $T_{LAP}(n)$ die Dauer einer kompletten Umdrehung des rotierenden Elements (5) ist.

**22.** Verfahren nach einem der vorstehenden Ansprüche, das ferner die Schritte umfasst:

- Bestimmen einer Varianz ($\alpha(n)$) des fehlerkorrigierten Sensorsignals ($\varepsilon(n)$), und
- Abschätzen des ersten Schätzwerts ($r(n)$) auf Grundlage der so bestimmten Varianz ($\alpha(n)$).

**23.** Verfahren nach Anspruch 22, wobei der Schritt des Bestimmens einer Varianz ($\alpha(n)$) des fehlerkorrigierten Sensorsignals ($\varepsilon(n)$) den Schritt des Tiefpaß-Filterns des fehlerkorrigierten Sensorsignals ($\varepsilon(n)$) gemäß folgender Relation umfasst:

$$\alpha(n) = Var(\varepsilon) = LP(\varepsilon^2) - LP(\varepsilon)^2 \text{ ,}$$

wobei *LP*(ε) ein Tiefpaß-gefilterter Wert des fehlerkorrigierten Sensorsignals (ε(*n*)) ist und *LP*(ε²) ein Tiefpaß-gefilterter Wert des Quadrats (ε²(*n*)) des fehlerkorrigierten Sensorsignals (ε(*n*)) ist.

**24.** Verfahren nach Anspruch 23, wobei das Tiefpaßfiltern gemäß folgender Filterrelation implementiert wird:

$$LP: \ \alpha(n+1) = (1-\lambda)\alpha(n) + \lambda\varepsilon(n) \text{ ,}$$

wobei α ein Schätzwert der Varianz *Var*(ε) ist, λ ein Vergessensfaktor des Filters ist, und ε(*n*) das fehlerkorrigierte Sensorsignal ist.

**25.** Verfahren nach einem der vorstehenden Ansprüche, das ferner den Schritt des Bestimmens von Signaländerungswerten *(CUSUMCounter*(*n*)) gemäß folgender Relation umfasst:

$$CUSUMCounter(n+1) = \min(\max(CUSUMCounter(n) + \alpha(n) - Drift, 0), CounterLimit) \text{ ,}$$

wobei α(*n*) die von dem Varianzbestimmungsabschnitt erhaltene Varianz ist, und *Drift* und *CounterLimit* Abstimmparameter sind.

**26.** Verfahren nach Anspruch 25, das ferner das Vergleichen der Signaländerungswerte (*CUSUMCounter*(*n*)) mit einem ersten und einem zweiten Schwellwert (*set,reset*) umfasst und das Ausgeben eines aktuellen ersten Schätzwerts (*r*(*n*))*,* der einen Unebene-Straße-Zustand ausgibt falls der aktuelle Signaländerungswert *(CUSUMCounter*(*n*)) größer ist als der erste Schwellwert (*set*), einen aktuellen ersten Schätzwert ausgibt, der einen Normal-Straße-Zustand angibt falls der Signaländerungswert (*CUSUMCounter*(*n*)) kleiner ist als der zweite Schwellwert (*reset*)*,* und ansonsten einen aktuellen ersten Schätzwert ausgibt, der gleich ist zum vorhergehenden ersten Schätzwert (*r*(*n*-1)).

**27.** Verfahren nach einem der vorstehenden Ansprüche, das ferner umfasst:

- Bereitstellen eines ersten Schätzwerts (α$_i$(*n*))*,* der den Bodenzustand unter dem jeweiligen Rad für jedes Rad (*i = FL,FR,RL,RR*) des Fahrzeugs mit mehr als einem Rad angibt, und
- Kombinieren der ersten Schätzwerte (α$_i$(*n*)), um einen kombinierten ersten Schätzwert (γ(*n*), *I*$_{h1}$(*n*)) zu erhalten, der den Straßenzustand unter dem Fahrzeug angibt.

**28.** Verfahren nach Anspruch 27, wobei der kombinierte erste Schätzwert (*y(n), I*$_{h1}$(*n*)) bestimmt wird durch

- Mitteln der von den ersten Analyseeinheiten (8) bereitgestellten ersten Schätzwerte (α$_i$(*n*)),
- Verwenden von Netzwerken des Reihenentwicklungstyps, insbesondere neuronale Netzwerke, Radialbasisfunktionennetzwerke, Fuzzy-Netzwerke, auf Grundlage der ersten Schätzwerte (α$_i$(*n*)),
- Verwenden einer min-Funktion auf Grundlage der ersten Schätzwerte (α$_i$(*n*)), und/oder
- Verwenden einer max-Funktion auf Grundlage der ersten Schätzwerte (α$_i$(*n*)).

**29.** Verfahren nach Anspruch 27 oder 28, in Kombination mit Anspruch 25 oder 26, wobei ein Signaländerungswert (*CUSUMCounter*(*n*)) bestimmt wird auf Grundlage des kombinierten ersten Schätzwerts (γ(*n*))*.*

**30.** Verfahren nach einem der vorstehenden Ansprüche, das ferner umfasst:

- Bestimmen eines den Bodenzustand angebenden zweiten Schätzwerts *(β(n))* aus dem Raddrehzahlsignal (ω(*n*)), das von dem Raddrehzahlsensor (4) empfangen wird; und
- Bestimmen eines den Bodenzustand angebenden kombinierten ersten Schätzwerts (*R*(*n*)) auf Grundlage des ersten und des zweiten Schätzwerts (α(*n*)*,* β(*n*))*.*

**31.** Verfahren nach Anspruch 30, das ferner umfasst:

- Filtern des Raddrehzahlsignals ($\omega(n)$) mit einem Bandpaß- oder Hochpaßfilter, und Bestimmen eines Varianzwerts ($\beta(n)$) aus dem gefilterten Raddrehzahlsignal ($\tilde{\omega}(n)$), wobei der Varianzwert ($\beta(n)$) den Bodenzustand unter dem jeweiligen Rad angibt;
- Korrelieren der Raddrehzahlsignale ($\omega(n)$) der Räder (*i = FL,FR,RL,RR*) auf einer erste Seite des Fahrzeugs (1) mit den Raddrehzahlsignalen ($\omega(n)$) der Räder (*i = FL,FR,RL,RR*) auf einer zweiten Seite des Fahrzeugs (1), wobei der Korrelationswert (*r(n)*) den Bodenzustand angibt;
- Korrelieren der Raddrehzahlsignale ($\omega(n)$) der Räder *(i = FL,FR,RL,RR)* auf einer ersten Achse des Fahrzeugs (1) mit den Raddrehzahlsignalen ($\omega(n)$) der Räder (*i=FL,FR,RL,RR*) auf einer zweiten Achse des Fahrzeugs (1), wobei der Korrelationswert (*r(n)*) den Bodenzustand angibt; oder
- Bestimmen der höchsten Fourier-Frequenz (*r(n)*) des Raddrehzahlsignals ($\omega(n)$), welche den Bodenzustand angibt.

**32.** Verfahren nach Anspruch 30 oder 31, umfassend die Schritte:

- Bereitstellen eines ersten Schätzwerts ($\alpha_i(n)$), der den Bodenzustand unter dem jeweiligen Rad angibt, für jedes Rad (*i = FL,FR,RL,RR*) des Fahrzeugs mit mehr als einem Rad; und
- Kombinieren der ersten Schätzwerte ($\alpha_i(n)$), um einen kombinierten ersten Schätzwert ($\gamma(n)$) zu erhalten, der den Straßenzustand unter dem Fahrzeug angibt;
- Bestimmen von Signaländerungswerten (*CUSUMCounter(n)*) auf Grundlage der kombinierten ersten Schätzwerte ($\beta(n)$) gemäß folgender Relation:

$$CUSUMCounter(n+1) = \min(\max(CUSUMCounter(n) + \gamma(n) - Drift, 0), CounterLimit)\;,$$

wobei *Drift* und *CounterLimit* Abstimmparameter sind;

- Bereitstellen eines zweiten Schätzwerts *($\beta_i(n)$)*, der den Bodenzustand unter dem jeweiligen Rad angibt, für jedes Rad (*i=FL,FR,RL,RR*) des Fahrzeugs; und
- Kombinieren der zweiten Schätzwerte ($\beta_i(n)$), um einen kombinierten zweiten Schätzwert ($r_2(n)$) zu erhalten, der den Bodenzustand unter dem Fahrzeug angibt;
- Kombinieren der Signaländerungswerte (*CUSUMCounter(n)*) und der zweiten kombinierten Schätzwerte ($r_2(n)$), um einen kombinierten Schätzwert ($\Omega(n)$, $R(n)$) zu erhalten, der den Straßenzustand unter dem Fahrzeug angibt.

**33.** Verfahren nach Anspruch 30 oder 31, umfassend:

- für jedes Rad *(i = FL,FR,RL,RR)* des Fahrzeugs mit mehr als einem Rad, Bereitstellen eines ersten Schätzwerts ($a_i(n)$), der den Bodenzustand unter dem jeweiligen Rad angibt; und
- Kombinieren der ersten Schätzwerte ($\alpha_i(n)$), um einen kombinierten ersten Schätzwert ($r_1(n)$) zu erhalten, der den Straßenzustand unter dem Fahrzeug angibt;
- für jedes Rad (*i=FL,FR,RL,RR*) des Fahrzeugs, Bereitstellen eines zweiten Schätzwerts ($\beta_i(n)$), der den Bodenzustand unter dem jeweiligen Rad angibt; und
- Kombinieren der zweiten Schätzwerte ($\beta_i(n)$), um einen kombinierten zweiten Schätzwert ($r_2(n)$) zu erhalten, der den Bodenzustand unter dem Fahrzeug angibt
- Kombinieren des ersten und des zweiten kombinierten Schätzwerts ($r_1(n)$, $r_2(n)$), um einen kombinierten Schätzwert ($\Omega(n)$) zu erhalten, der den Straßenzustand unter dem Fahrzeug angibt; und
- Bestimmen von Signaländerungswerten (*CUSUMCounter(n)*) auf Grundlage der kombinierten Schätzwerte ($\Omega(n)$) gemäß folgender Relation:

$$CUSUMCounter(n+1) = \min(\max(CUSUMCounter(n) + \Omega(n) - Drift, 0), CounterLimit)$$

, wobei *Drift* and *CounterLimit* Abstimmparameter sind.

**34.** Verfahren nach den Ansprüchen 32 oder 33, ferner umfassend die Schritte von Anspruch 26.

**35.** Computerprogramm umfassend Programmcode zum Ausführen eines Verfahrens, das, wenn es auf einem Verarbeitungssystem ausgeführt wird, den Bodenzustand unter einem fahrenden Fahrzeug abschätzt, wobei das Verfahren folgende Schritte umfasst:

- Ermitteln eines Raddrehzahlsignals ($t(n)$, $\omega(n)$) mittels eines Raddrehzahlsensors (4), das die Raddrehzahl eines Rades eines Fahrzeugs angibt, das über dem Boden (2, 3) fährt; und
- Abschätzen eines Sensorfehlersignals ($\hat{\delta}_1$) aus dem Raddrehzahlsignal $(t(n))$, das den Sensorfehler des Raddrehzahlsensors (4) angibt;
- Bestimmen eines fehlerkorrigierten Sensorsignals ($\varepsilon(n)$) aus dem Raddrehzahlsignal $(t(n))$ und dem Sensorfehlersignal ($\hat{\delta}_l$) ; und
- Abschätzen eines den Bodenzustand angebenden ersten Schätzwerts ($r(n)$, $\alpha(n)$) aus dem fehlerkorrigierten Sensorsignal ($\varepsilon(n)$).

**Revendications**

**1.** Système destiné à l'estimation de l'état du sol en dessous d'un véhicule en train de circuler, comprenant :

♦ un capteur de vitesse de roue (4) pour détecter un signal de vitesse de roue ($t(n)$, $\omega(n)$) indiquant la vitesse de roue d'une roue d'un véhicule circulant au-dessus du sol (2,3) ; et
♦ une première unité d'analyse (8) couplée audit capteur de vitesse de roue (4) qui comprend
♦ une section d'estimation d'imperfection du capteur (9) qui est conçue pour estimer un signal d'imperfection du capteur ($\delta_1$) à partir du signal de vitesse de roue ($t(n)$) indiquant l'imperfection du capteur de vitesse de roue (4) ;
♦ une section de correction du signal (10) conçue pour déterminer un signal de capteur dont l'imperfection est corrigée ($\varepsilon(n)$) à partir du signal de vitesse de roue ($t_n$) et du signal d'imperfection du capteur ($\delta_1$) ; et
♦ une section d'estimation de l'état du sol (11) conçue pour estimer une première valeur d'estimation ($r(n)$, $\alpha(n)$) indiquant l'état du sol à partir du signal de capteur dont l'imperfection est corrigée ($\varepsilon(n)$).

**2.** Système selon la revendication 1, dans lequel le capteur de vitesse de roue (4) comprend un élément rotatif segmenté (5), et la section d'estimation d'imperfection du capteur (9) est conçue pour estimer, à chaque révolution de l'élément rotatif (5), une valeur d'imperfection du capteur ($\delta_1$) représentative du signal d'imperfection du capteur pour chacun des segments (6) de l'élément rotatif (5).

**3.** Système selon la revendication 2, dans lequel la valeur d'imperfection du capteur ($\delta_1$) est une moyenne pondérée des valeurs d'imperfection du capteur ($\gamma(n)$) des révolutions précédentes et courantes (n) de l'élément rotatif.

**4.** Système selon la revendication 2, dans lequel la section d'estimation de l'imperfection du capteur (9) comprend un filtre passe-bas mis en oeuvre selon le rapport du filtre suivant :

$$LP: \quad \widehat{\delta}_l = (1-\mu)\widehat{\delta}_l + \mu y(n) \text{ ,}$$

avec

$$y(n) = \frac{2\pi}{T_{LAP}(n)}(t(n) - t(n-1)) - \frac{2\pi}{L}$$

où $\delta_1$ est une valeur d'estimation de l'imperfection du capteur, $\mu$ est un facteur d'oubli du filtre, $t(n)$ et $t(n-1)$ est le signal de vitesse de roue, L est le nombre total de segments (6) de l'élément rotatif (5) et $T_{LAP}(n)$ est la durée d'une révolution complète de l'élément rotatif (5) .

**5.** Système selon l'une quelconque des revendications précédentes, dans lequel la section d'estimation de l'état du sol (11) comprend :

♦ une section de détermination de variation (12) conçue pour déterminer la variation *(α(n))* du signal de capteur dont l'imperfection est corrigée (ε*(n))*, et
♦ une sous-section de l'estimation de l'état du sol (13) conçue pour estimer la première valeur d'estimation (*r(n)*) sur la base de la variation *(α(n))* ainsi déterminée.

**6.** Système selon la revendication 5, dans lequel la section de détermination de variation (12) comprend un filtre passe-bas (16) pour déterminer la variation (α*(n)*) du signal de capteur dont l'imperfection est corrigée (s(n)) selon l'équation suivante :

$$\alpha(n) = Var(\varepsilon) = LP(\varepsilon^2) - LP(\varepsilon)^2 \,,$$

dans laquelle *LP(ε)* est une valeur filtrée passe-bas du signal du capteur dont l'imperfection est corrigée *(ε(n))* et *LP(ε²)* est une valeur filtrée passe-bas du carré (ε²*(n)*) du signal de capteur dont l'imperfection est corrigée (ε*(n)*).

**7.** Système selon la revendication 6, dans lequel le filtre passe-bas (16) est mis en oeuvre selon l'équation du filtre suivante :

$$LP : \quad \alpha(n+1) = (1-\lambda)\alpha(n) + \lambda\varepsilon(n) \,,$$

dans laquelle α est une valeur d'estimation de la variation *Var(ε)*, λ est un facteur d'oubli du filtre, et ε*(n)* est le signal de capteur dont l'imperfection est corrigée.

**8.** Système selon la revendication 5, dans lequel la sous-section de l'estimation de l'état du sol (13) comprend une section de détermination du changement du signal (14) conçue pour déterminer les valeurs de changement du signal (CUSUMCounter(n)) selon l'équation suivante :

$$CUSUMCounter(n+1) = \min(\max(CUSUMCounter(n) + \alpha(n) - Drift, 0), CounterLimit) \,,$$

dans laquelle α*(n)* est la variation obtenue à partir de la section de détermination de variation, et Drift et CounterLimit sont des paramètres de réglage.

**9.** Système selon la revendication 8, dans lequel la sous-section de l'estimation de l'état du sol (13) comprend également une section de décision (15) conçue pour comparer les valeurs de changement du signal (*CUSUMCounter(n)*) à partir de la section de détermination du changement du signal (14) avec une première et une seconde valeur de seuil (set, reset) et pour produire une première valeur d'estimation courante (*r(n)*) indicative d'un état de route irrégulier si la valeur de changement de signal courante (*CUSUMCounter(n)*) est supérieure à la première valeur de seuil (set), une première valeur d'estimation courante indicative d'un état normal de la route si la valeur de changement du signal *(CUSUMCounter(n))* est inférieure à la seconde valeur de seuil (reset), et autrement une première valeur d'estimation courante égale à la première valeur d'estimation précédente (*r(n-1)*).

**10.** Système selon l'une quelconque des revendications précédentes, comprenant :

♦ une première unité d'analyse (8) pour chaque roue (i = *FL, FR, RL, RR)* du véhicule comprenant plus d'une roue, dans laquelle chaque première unité d'analyse (8) est conçue pour fournir une première valeur d'estimation (α*ᵢ(n)*) indiquant l'état du sol en dessous de la roue respective ; et
♦ une section de combinaison (17) conçue pour combiner les premières valeurs d'estimation (α*ᵢ(n)*) fournies par chacune des premières unités d'analyse (8) afin d'obtenir une première valeur d'estimation combinée (γ *(n), I_{h1}(n)*) indiquant l'état de la route en dessous du véhicule.

**11.** Système selon la revendication 10, dans lequel la première valeur d'estimation combinée (γ*(n)*, *I_{h1}(n)*) est

déterminée :

> ♦ en pondérant les premières valeurs d'estimation ($\alpha_i(n)$) fournies par chacune des premières unités d'analyse (8),
> ♦ en utilisant des réseaux de type à expansion en série, en particulier les réseaux neuraux, les réseaux à fonction de base radiale, réseaux flous, sur la base des premières valeurs d'estimation ($\alpha_i(n)$),
> ♦ en utilisant une fonction minimale sur la base des premières valeurs d'estimation ($\alpha_i(n)$), et/ou
> ♦ en utilisant une fonction maximale sur la base des premières valeurs d'estimation ($\alpha_i(n)$).

**12.** Système selon la revendication 10 ou 11, en combinaison avec la revendication 8 ou 9, dans lequel la section de détermination du changement du signal (14) est couplée à la section de combinaison (17) afin de déterminer la valeur de changement du signal (*CUSUMCounter(n)*) sur la base de la première valeur d'estimation combinée ($\gamma(n)$).

**13.** Système selon l'une quelconque des revendications précédentes, comprenant également :

> ♦ une seconde unité d'analyseur (19) associée au capteur de vitesse de roue (4) et conçue pour déterminer une seconde valeur d'estimation ($\beta(n)$) indiquant l'état du sol à partir du signal de vitesse de roue ($\omega(n)$) reçu du capteur de vitesse de roue (4) ; et
> ♦ une unité de décision (18) conçue pour déterminer une valeur d'estimation combinée ($R(n)$) indiquant l'état du sol sur la base de la première et de les secondes valeurs d'estimation ($\alpha(n), \beta(n)$) à partir de la première et de la seconde unités d'analyseur (8,19), respectivement.

**14.** Système selon la revendication 13, dans lequel la seconde unité d'analyseur (19) comprend :

> ♦ une section de filtre passe-bande ou passe-haut (21) pour filtrer le signal de vitesse de roue ($\omega(n)$), et une section d'estimation de variation (12) pour déterminer une valeur de variation ($\beta(n)$) à partir du signal de vitesse de roue filtré ($\omega(n)$), dans lequel la valeur de variation ($\beta(n)$) indique l'état du sol en dessous de la roue respective ;
> ♦ une section de corrélation latérale conçue pour corréler les signaux de vitesse de roue ($\omega(n)$) des roues (*i = FL, FR, RL, RR)* sur un premier côté du véhicule (1) avec les signaux de vitesse de roue ($\omega(n)$) des roues (*i = FL, FR, RL, RR)* sur un second côté du véhicule (1), dans lequel la valeur de corrélation ($r(n)$) indique l'état du sol ;
> ♦ une section de corrélation dans le sens de l'essieu conçue pour corréler les signaux de vitesse de roue ($\omega(n)$) des roues (*i = FL, FR, RL, RR)* sur un premier essieu du véhicule (1) avec les signaux de vitesse de roue ($\omega(n)$) des roues (*i = FL, FR, RL, RR)* sur un second essieu du véhicule (1), dans lequel la valeur de corrélation ($r(n)$) indique l'état du sol ; ou
> ♦ une section de détermination de fréquence conçue pour déterminer la fréquence de Fourier la plus élevée ($r(n)$) du signal de vitesse de roue ($\omega(n)$) qui indique l'état du sol.

**15.** Système selon la revendication 13 ou 14, comprenant :

> ♦ une première unité d'analyse (8) pour chaque roue (*i = FL, FR, RL, RR)* du véhicule comprenant plus d'une roue, dans lequel chaque première unité d'analyse (8) est conçue pour fournir une première valeur d'estimation ($\alpha_i(n)$) indiquant l'état du sol en dessous de la roue respective, et
> ♦ une première section de combinaison (17) conçue pour combiner les premières valeurs d'estimation ($\alpha_i(n)$) fournies par chacune des premières unités d'analyse (8) afin d'obtenir une première valeur d'estimation combinée ($\gamma(n)$) indiquant l'état de la route en dessous du véhicule ;
> ♦ une section de détermination du changement du signal (14) conçue pour déterminer les valeurs de changement du signal *(CUSUMCounter(n))* sur la base des premières valeurs d'estimation combinées ($\gamma(n)$) selon l'équation suivante :

$$CUSUMCounter(n+1) = \min(\max(CUSUMCounter(n) + \gamma(n) - Drift, 0), CounterLimit),$$

dans laquelle Drift et CounterLimit sont des paramètres de réglage ;

> ♦ une seconde unité d'analyseur (19) pour chaque roue (*i = FL, FR, RL, RR)* du véhicule, dans laquelle chaque seconde unité d'analyseur (19) est conçue pour fournir une seconde valeur d'estimation ($\beta_i(n)$) indiquant l'état du sol en dessous de la roue respective, et

♦ une seconde section de combinaison (17') conçue pour combiner les secondes valeurs d'estimation ($\beta_i(n)$) fournies par chacune des secondes unités d'analyseur (19) afin d'obtenir une seconde valeur d'estimation combinée *(r2(n))* indiquant l'état de la route en dessous du véhicule ;

♦ une section de combinaison de sortie (22) pour combiner les valeurs de changement du signal *(CUSUMCounter(n))* et les secondes valeurs d'estimation combinées *(r2(n))* afin d'obtenir une valeur d'estimation combinée ($\Omega(n)$, *R(n))* indiquant l'état de la route en dessous du véhicule.

**16.** Système selon la revendication 13 ou 14, comprenant :

♦ une première unité d'analyse (8) pour chaque roue (*i = FL, FR, RL, RR)* du véhicule comprenant plus d'une roue, dans laquelle chaque première unité d'analyse (8) est conçue pour fournir une première valeur d'estimation ($\alpha_i(n)$) indiquant l'état du sol en dessous de la roue respective, et

♦ une première section de combinaison (17) conçue pour combiner les premières valeurs d'estimation ($\alpha_i(n)$) fournies par chacune des premières unités d'analyse (8) afin d'obtenir une première valeur d'estimation combinée ($r_1(n)$) indiquant l'état de la route en dessous du véhicule ;

♦ une seconde unité d'analyseur (19) pour chaque roue (*i = FL, FR, RL, RR)* du véhicule, dans laquelle chaque seconde unité d'analyseur (19) est conçue pour fournir une seconde valeur d'estimation ($\beta_i(n)$) indiquant l'état du sol en dessous de la roue respective, et

♦ une seconde section de combinaison (17') conçue pour combiner les secondes valeurs d'estimation ($\beta_i(n)$) fournies par chacune des secondes unités d'analyseur (19) afin d'obtenir une seconde valeur d'estimation combinée (*r2(n)*) indiquant l'état de la route en dessous du véhicule ;

♦ une section de combinaison de sortie (22) pour combiner la première et la seconde valeurs d'estimation combinées ($r_1(n)$, $r_2(n)$) afin d'obtenir une valeur d'estimation combinée ($\Omega(n)$) indiquant l'état de la route en dessous du véhicule ; et

♦ une section de détermination du changement du signal (14) conçue pour déterminer les valeurs de changement du signal (*CUSUMCounter(n)*) sur la base des valeurs d'estimation combinées ($\Omega(n)$) à partir de la section de combinaison de sortie (22) selon l'équation suivante :

$$CUSUMCounter(n+1) = \min(\max(CUSUMCounter(n) + \Omega(n) - Drift, 0), CounterLimit) ,$$

dans laquelle Drift et CounterLimit sont des paramètres de réglage.

**17.** Système selon la revendication 15 ou 16, comprenant également une section de décision (15) selon la revendication 9.

**18.** Méthode destinée à l'estimation de l'état du sol en dessous d'un véhicule en train de circuler, comprenant les étapes consistant à :

♦ détecter un signal de vitesse de roue (*t(n)*, $\omega(n)$) au moyen d'un capteur de vitesse de roue (4) indiquant la vitesse de roue d'une roue d'un véhicule circulant au-dessus du sol (2,3) ; et

♦ estimer un signal d'imperfection du capteur ($\delta_1$) à partir du signal de vitesse de roue (*t(n)*) indiquant l'imperfection du capteur du capteur de vitesse de roue (4) ;

♦ déterminer un signal de capteur dont l'imperfection est corrigée ($\varepsilon(n)$) à partir du signal de vitesse de roue (*t(n)*) et du signal d'imperfection du capteur ($\delta_1$) ; et

♦ estimer une première valeur d'estimation *(r(n)*, $\alpha(n)$) indiquant l'état du sol à partir du signal de capteur dont l'imperfection est corrigée ($\varepsilon(n)$).

**19.** Méthode selon la revendication 18, dans laquelle l'étape de l'estimation du signal d'imperfection du capteur ($\delta_1$) à partir du signal de vitesse de roue (*t(n)*) comprend l'estimation, à chaque révolution de l'élément rotatif (5), d'une valeur d'imperfection du capteur ($\delta_1$) représentative du signal d'imperfection du capteur pour chacun des segments (6) d'un élément rotatif (5).

**20.** Méthode selon la revendication 19, dans laquelle la valeur d'imperfection du capteur ($\delta_1$) est une moyenne pondérée de valeurs d'imperfection du capteur ($\gamma(n)$) des révolutions précédentes et courantes (n) de l'élément rotatif.

**21.** Méthode selon la revendication 19, dans laquelle l'étape d'estimation du signal d'imperfection du capteur ($\delta_1$) à

partir du signal de vitesse de roue (*t(n)*) comprend une étape de filtrage passe-bas selon l'équation du filtre suivante :

$$LP: \quad \hat{\delta}_1 = (1 - \mu)\hat{\delta}_1 + \mu y(n) \, ,$$

dans laquelle

$$y(n) = \frac{2\pi}{T_{LAP}(n)}(t(n) - t(n-1)) - \frac{2\pi}{L}$$

dans laquelle $\delta_1$ est une valeur d'estimation de l'imperfection du capteur, $\mu$ est un facteur d'oubli du filtre, *t(n)* et *t(n-1)* est le signal de vitesse de roue, L est le nombre total de segments (6) de l'élément rotatif (5) et $T_{LAP}(n)$ est la durée d'une révolution complète de l'élément rotatif (5).

**22.** Méthode selon l'une quelconque des revendications précédentes, comprenant également les étapes consistant à :

◆ déterminer une variation *($\alpha$(n))* du signal de capteur dont l'imperfection est corrigée *($\varepsilon$(n))*, et
◆ estimer la première valeur d'estimation (*r(n)*) sur la base de la variation ($\alpha$*(n)*) ainsi déterminée.

**23.** Méthode selon la revendication 22, dans laquelle l'étape de détermination d'une variation *($\alpha$(n))* du signal de capteur dont l'imperfection est corrigée *($\varepsilon$(n))* comprend l'étape de filtrage passe-bas du signal de capteur dont l'imperfection est corrigée *($\varepsilon$(n))* selon l'équation suivante :

$$\alpha(n) = Var(\varepsilon) = LP(\varepsilon^2) - LP(\varepsilon)^2 \, ,$$

dans laquelle *LP($\varepsilon$)* est une valeur filtrée passe-bas du signal du capteur dont l'imperfection est corrigée *($\varepsilon$(n))* et *LP($\varepsilon^2$)* est une valeur filtrée passe-bas du carré *($\varepsilon^2$(n))* du signal de capteur dont l'imperfection est corrigée *($\varepsilon$(n))*.

**24.** Méthode selon la revendication 23, dans laquelle le filtrage passe-bas est mis en oeuvre selon l'équation du filtre suivante :

$$LP: \quad \alpha(n+1) \approx (1 - \lambda)\alpha(n) + \lambda\varepsilon(n) \, ,$$

dans laquelle $\alpha$ est une valeur d'estimation de la variation *Var($\varepsilon$)*, $\lambda$ est un facteur d'oubli du filtre, et $\varepsilon$*(n)* est le signal de capteur dont l'imperfection est corrigée.

**25.** Méthode selon l'une quelconque des revendications précédentes, comprenant également l'étape de détermination des valeurs de changement du signal (*CUSUMCounter(n)*) selon l'équation suivante :

$$CUSUMCounter(n+1) = \min(\max(CUSUMCounter(n) + \alpha(n) - Drift, 0), CounterLimit) \, ,$$

dans laquelle $\alpha$*(n)* est la variation obtenue à partir de la section de détermination de variation, et Drift et CounterLimit sont des paramètres de réglage.

**26.** Méthode selon la revendication 25, comprenant également la comparaison des valeurs de changement du signal (*CUSUMCounter(n)*) avec une première et une seconde valeurs de seuil (set, reset) et la production d'une première valeur d'estimation courante (*r(n)*) indicative d'un état de route irrégulier si la valeur de changement de signal courante *(CUSUMCounter(n))* est supérieure à la première valeur de seuil (set), une première valeur d'estimation courante indicative d'un état normal de la route si la valeur de changement du signal (*CUSUMCounter(n)*) est inférieure à la seconde valeur de seuil (reset), et autrement une première valeur d'estimation courante égale à la première valeur d'estimation précédente (r(n -1)).

**27.** Méthode selon l'une quelconque des revendications précédentes, comprenant également :

♦ la fourniture d'une première valeur d'estimation ($\alpha_i$ (n)) indiquant l'état du sol en dessous de la roue respective pour chaque roue (*i = FL, FR, RL, RR)* du véhicule comprenant plus d'une roue, et
♦ la combinaison des premières valeurs d'estimation ($\alpha_i(n)$) afin d'obtenir une première valeur d'estimation combinée ($\gamma(n)$, $I_{h1}(n)$) indiquant l'état de la route en dessous du véhicule.

**28.** Méthode selon la revendication 27, dans laquelle la première valeur d'estimation combinée ($\gamma(n)$, $I_{h1}(n)$) est déterminée en

♦ pondérant les premières valeurs d'estimation ($\alpha_i(n)$) fournies par chacune des premières unités d'analyse (8),
♦ utilisant les réseaux de type à expansion en série, en particulier les réseaux neuraux, les réseaux à fonctions de base radiale, les réseaux flous, sur la base des premières valeurs d'estimation ($\alpha_i(n)$),
♦ utilisant une fonction minimale sur la base des premières valeurs d'estimation ($\alpha_i$ (n)), et/ou
♦ utilisant une fonction maximale sur la base des premières valeurs d'estimation ($\alpha_i(n)$).

**29.** Méthode selon la revendication 27 ou 28, en combinaison avec la revendication 25 ou 26, dans laquelle une valeur de changement du signal *(CUSUMCounter(n))* est déterminée sur la base de la première valeur d'estimation combinée ($\gamma(n)$).

**30.** Méthode selon l'une quelconque des revendications précédentes, comprenant également :

♦ la détermination d'une seconde valeur d'estimation ($\beta(n)$) indiquant l'état du sol à partir du signal de vitesse de roue ($\omega(n)$) reçu à partir du capteur de vitesse de roue (4) ; et
♦ la détermination d'une valeur d'estimation combinée (*R(n)*) indiquant l'état du sol sur la base de la première et de la seconde valeurs d'estimation ($\alpha(n)$, $\beta(n)$).

**31.** Méthode selon la revendication 30, comprenant également :

♦ la filtration du signal de vitesse de roue ($\omega(n)$) avec un filtre passe-bande ou passe-haut, et la détermination d'une valeur de variation ($\beta(n)$) à partir du signal de vitesse de roue filtré ($\omega(n)$), dans lequel la valeur de variation ($\beta(n)$) indique l'état du sol en dessous de la roue respective ;
♦ la corrélation des signaux de vitesse de roue ($\omega(n)$) des roues *(i = FL, FR, RL, RR)* sur un premier côté du véhicule (1) avec les signaux de vitesse de roue ($\omega(n)$) des roues (*i = FL, FR, RL, RR)* sur un second côté du véhicule (1), dans lequel la valeur de corrélation (*r(n)*) indique l'état du sol ;
♦ la corrélation des signaux de vitesse de roue ($\omega(n)$) des roues (*i = FL, FR, RL, RR)* sur un premier essieu du véhicule (1) avec les signaux de vitesse de roue ($\omega(n)$) des roues (*i = FL, FR, RL, RR)* sur un second essieu du véhicule (1), dans lequel la valeur de corrélation (*r(n)*) indique l'état du sol ; ou
♦ la détermination de la fréquence de Fourier la plus élevée (*r(n)*) du signal de vitesse de roue ($\omega(n)$) indiquant l'état du sol.

**32.** Méthode selon la revendication 30 ou 31, comprenant les étapes consistant à :

♦ fournir une première valeur d'estimation ($\alpha_i(n)$) indiquant l'état du sol en dessous de la roue respective, pour chaque roue (*i = FL, FR, RL, RR)* du véhicule comprenant plus d'une roue ;
♦ combiner les premières valeurs d'estimation ($\alpha_i(n)$) afin d'obtenir une première valeur d'estimation combinée ($\gamma(n)$) indiquant l'état de la route en dessous du véhicule ;
♦ déterminer les valeurs de changement du signal (*CUSUMCounter(n)*) sur la base des premières valeurs d'estimation combinées ($\gamma(n)$) selon l'équation suivante :

$$CUSUMCounter(n+1) = \min(\max(CUSUMCounter(n) + \gamma(n) - Drift, 0), CounterLimit),$$

dans laquelle Drift et CounterLimit sont des paramètres de réglage ;

♦ fournir une seconde valeur d'estimation ($\beta_i(n)$) indiquant l'état du sol en dessous de la roue respective, pour chaque roue *(i = FL, FR, RL, RR)* du véhicule ; et

♦ combiner les secondes valeurs d'estimation ($\beta_i(n)$) afin d'obtenir une seconde valeur d'estimation combinée ($r_2(n)$) indiquant l'état de la route en dessous du véhicule ;

♦ combiner les valeurs de changement du signal (*CUSUMCounter(n)*) et les secondes valeurs d'estimation combinées (*r2(n)*) afin d'obtenir une valeur d'estimation combinée (*c(n),R(n)*) indiquant l'état de la route en dessous du véhicule.

**33.** Méthode selon la revendication 30 ou 31, comprenant :

pour chaque roue *(i = FL, FR, RL, RR)* du véhicule comprenant plus d'une roue, la fourniture d'une première valeur d'estimation ($\alpha_i(n)$) indiquant l'état du sol en dessous de la roue respective ; et

la combinaison des premières valeurs d'estimation ($\alpha_i(n)$) afin d'obtenir une première valeur d'estimation combinée ($r_1(n)$) indiquant l'état de la route en dessous du véhicule ;

pour chaque roue *(i = FL, FR, RL, RR)* du véhicule, la fourniture d'une seconde valeur d'estimation ($\beta_i(n)$) indiquant l'état du sol en dessous de la roue respective ; et

la combinaison des secondes valeurs d'estimation ($\beta_i(n)$) afin d'obtenir une seconde valeur d'estimation combinée ($r_2(n)$) indiquant l'état de la route en dessous du véhicule

la combinaison des première et seconde valeurs d'estimation combinées ($r_1(n)$, $r_2(n)$) afin d'obtenir une valeur d'estimation combinée M (n)) indiquant l'état de la route en dessous du véhicule ; et

la détermination des valeurs de changement du signal (*CUSUMCounter*(ni)) sur la base des valeurs d'estimation combinées ($\Omega(n)$) selon l'équation suivante :

$$CUSUMCounter(n+1) = \min(\max(CUSUMCounter(n) + \Omega(n) - Drift, 0), CounterLimit)$$

dans laquelle Drift et CounterLimit sont des paramètres de réglage.

**34.** Méthode selon la revendication 32 ou 33, comprenant également les étapes selon la revendication 26.

**35.** Programme informatique comprenant un code de programme pour exécuter un procédé, quand il est exécuté sur un système de traitement, pour l'estimation de l'état du sol en dessous d'un véhicule en train de circuler, ledit procédé comprenant les étapes consistant à :

♦ détecter un signal de vitesse de roue (*t(n)*, $\omega(n)$) au moyen d'un capteur de vitesse de roue (4) indiquant la vitesse d'une roue d'un véhicule circulant au-dessus du sol (2,3) ; et

♦ estimer un signal d'imperfection du capteur ($\delta_l$) à partir du signal de vitesse de roue (*t(n)*) indiquant l'imperfection du capteur du capteur de vitesse de roue (4) ;

♦ déterminer un signal de capteur dont l'imperfection est corrigée ($\varepsilon(n)$) à partir du signal de vitesse de roue *(t(n))* et du signal d'imperfection du capteur ($\delta_1$) ; et

♦ estimer une première valeur d'estimation *(r(n)*, $\alpha(n)$) indiquant l'état du sol à partir du signal de capteur dont l'imperfection est corrigée ($\varepsilon(n)$).

Fig. 1

Fig. 2

**Fig. 3**

**Fig. 4**

Fig. 5

$\varepsilon(n)$ (Imperfection-corrected sensor signal)

**Ground condition estimation section 11**

| Variance estimation section |
| :---: |
| 12 |

$\alpha(n)$ (variance)

**Ground condition estimation subsection 13**

| Signal change determination section |
| :---: |
| 14 |

$CUSUMCounter(n)$
(signal change value)

| Decision section |
| :---: |
| 15 |

$r(n)$ (first estimation value)

**Fig. 6**

$\varepsilon(n)$ (Imperfection-corrected sensor signal)

Ground condition estimation section <u>11</u>

Variance estimation section
<u>12</u>

$\alpha(n)$ (variance)

**Fig. 7**

$\varepsilon(n)$ (Imperfection-corrected sensor signal)

Variance estimation section <u>12</u>

LP filter
<u>16</u>

$\alpha(n)$ (variance)

**Fig. 8**

| Wheel speed sensor FL <u>4</u> | Wheel speed sensor FR <u>4</u> | Wheel speed sensor RL <u>4</u> | Wheel speed sensor RR <u>4</u> |
|---|---|---|---|

$t_{FL}(n)$　　　　$t_{FR}(n)$　　　　$t_{RL}(n)$　　　　$t_{RR}(n)$

| Analyser unit FL <u>8</u> | Analyser unit FR <u>8</u> | Analyser unit RL <u>8</u> | Analyser unit RR <u>8</u> |
|---|---|---|---|

$\alpha_{FL}(n)$　　　　$\alpha_{FR}(n)$　　　　$\alpha_{RL}(n)$　　　　$\alpha_{RR}(n)$

| Combination section <u>17</u> |
|---|

$\gamma(n)$ (first estimation value)

**Fig. 9**

$\alpha_{FL}(n)$     $\alpha_{FR}(n)$     $\alpha_{RL}(n)$     $\alpha_{RR}(n)$

```
┌─────────────────────────────────────────────────────┐
│              Combination section                     │
│                     17                               │
└─────────────────────────────────────────────────────┘
```

$\gamma(n)$ (combined first estimation value)

```
        ┌─────────────────────────┐
        │      Signal change       │
        │  determination section   │
        │           14             │
        └─────────────────────────┘
```

$CUSUMCounter(n)$
(signal change value)

Decision unit
18

```
        ┌─────────────────────────┐
        │     Decision section     │
        │           15             │
        └─────────────────────────┘
```

$r(n)$ (first estimation value)

**Fig. 10**

```
                    ┌─────────────────────┐
                    │   Wheel speed       │
                    │     sensor          │
                    │       4             │
                    └──────────┬──────────┘
                               │  t(n)  (Wheel
                               │         speed signal)
              ┌────────────────┴────────────────┐
              ▼                                  ▼
    ┌───────────────────┐            ┌───────────────────┐
    │     First         │            │     Second        │
    │ Analyser unit     │            │ Analyser unit     │
    │       8           │            │      19           │
    └─────────┬─────────┘            └─────────┬─────────┘
              │ r₁(n) (first estimation         │ r₂(n) (second estimation
              │        value)                   │        value)
              ▼                                 ▼
    ┌──────────────────────────────────────────────────┐
    │              Decision unit                        │
    │                  18                               │
    └──────────────────────┬───────────────────────────┘
                           │  R(n) (combined estimation
                           │         value)
                           ▼
```

$t(n)$ (Wheel speed signal)

$r_1(n)$ (first estimation value)

$r_2(n)$ (second estimation value)

$R(n)$ (combined estimation value)

**Fig. 11**

Fig. 12

Fig. 13

Fig. 14

Fig. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5566090 A
- US 4837727 A
- EP 0795448 A2
- US 5719565 A
- EP 0212409 W
- EP 0307282 W
- EP 0307283 W